# EUROPÄISCHE PATENTANMELDUNG

(11) **EP 3 516 950 A1**
(43) Veröffentlichungstag der Anmeldung: **31.07.2019**
(21) Anmeldenummer: 19152763.9
(22) Anmeldetag: 21.01.2019
(51) Int. Cl.: A01G 9/24, A01G 25/16

(54) **VORRICHTUNG UND VERFAHREN ZUR AUFZUCHT VON PFLANZEN**

(30) Priorität: 25.01.2018 DE 102018101698
(71) Anmelder: agrilution GmbH, 81249 München (DE)
(72) Erfinder: LÖSSL, Maximilian, 80469 München (DE); WAGNER, Philipp, 82256 Fürstenfeldbruck (DE)
(74) Vertreter: Viering, Jentschura & Partner mbB Patent- und Rechtsanwälte

(57) **Zusammenfassung**

Vorrichtung zur Aufzucht von Pflanzen mit einer Bewässerungsvorrichtung (20), einer Beleuchtungsvorrichtung (30), einer Klimatisierungseinrichtung (40), einem Aufnahmeraum (12, 312) zum Aufnehmen einer oder mehrerer Saatmatten und einer Steuerungseinheit (60), die eingerichtet ist, mittels einer Programmsteuerung die Bewässerungsvorrichtung (20), die Beleuchtungsvorrichtung (30) und die Klimatisierungseinrichtung (40) zu steuern. Des Weiteren weist die Vorrichtung zur Aufzucht von Pflanzen mindestens einen Luftfeuchte-Sensor (316) zum Ermitteln der Luftfeuchtigkeit in dem Aufnahmeraum (312) und mindestens einen Temperatursensor (315) zum Ermitteln der Lufttemperatur in dem Aufnahmeraum (312) auf.

## Beschreibung

Verschiedene Ausführungsbeispiele betreffen allgemein eine Vorrichtung zur Aufzucht von Pflanzen und betreffen insbesondere eine Klimatisierungseinrichtung der Vorrichtung zur Aufzucht von Pflanzen und ein Verfahren zur Aufzucht von Pflanzen.

Im Bereich der Versorgung mit frischen Produkten, wie beispielsweise Kräutern, Salat, Obst und Gemüse, sind die Ansprüche der Verbraucher in den letzten Jahren zunehmend gestiegen. Insbesondere seit dem Anprangern von Missständen in der Haltung von Schlachttieren und der zunehmenden Verbreitung vegetarischer oder veganer Ernährung ist das Bewusstsein vieler Verbraucher für und ihr Bedarf an frischen Produkten gestiegen.

Bisher werden diese Produkte zum allergrößten Teil entweder auf Feldern oder in Gewächshäusern von Großbetrieben erzeugt und mittels des Verkaufs in Supermärkten zu den Verbrauchern gebracht. In kleinerem Umfang versorgen sich die Verbraucher auch direkt beim Erzeuger auf Wochenmärkten und im Direktverkauf auf Bauernhöfen, wobei diese Vertriebswege aufgrund der zeitlich eingeschränkten Verfügbarkeit oder der notwendigen räumlichen Nähe zum Erzeuger nur einem relativ kleinen Teil der Bevölkerung zur Verfügung stehen.

Mit dem für die eigene Gesundheit sensibilisierten Bewusstsein großer Teile insbesondere der in Städten lebenden Bevölkerung erwächst gerade hier zunehmend ein Bedürfnis nach Erzeugnissen aus kontrolliertem Anbau und sogar der Wunsch nach persönlicher Kontrolle und sinnstiftender Beschäftigung mit dem Anbau eigener, entsprechend frischer Produkte.

Allerdings hat nur ein sehr geringer Teil der städtischen Bevölkerung Zugang zu einem Garten oder entsprechenden Anlagen, in dem beispielsweise eigene kleine Gewächshäuser aufgestellt werden könnten, um frische Produkte anzubauen. Auch bietet die städtische Umgebung selten die Möglichkeit, ohne größeren organisatorischen Aufwand mit Pflanzkästen und -töpfen zu hantieren, geschweige denn, die darin angesetzten Pflanzen einerseits mit dem notwendigen Schutz gegenüber Wettereinflüssen zu versehen und andererseits ausreichend mit Sonnenlicht zu versorgen, um das erwünschte Wachstum der Pflanzen zu fördern.

Außerdem hat gerade die städtische Bevölkerung häufig einen Tagesablauf, der geprägt ist durch das Arbeiten außer Haus sowie häufig lange Wege zu und von der Arbeitsstätte, so dass keine Muße besteht, sich neben allem anderen auch noch um das Gedeihen von Pflanzen zu kümmern, dieses zu beobachten und die Pflege dieser Pflanzen an die jeweilige Wachstumsphase anzupassen.

Aufgrund all dieser Schwierigkeiten schrecken viele Menschen, die eigentlich gerne vom Anbau eigener Pflanzen und der Ernte eigener Produkte profitieren würden, vor dem Aufwand zurück, den das Anbauen dieser Pflanzen mit sich bringt. Dieses Zurückschrecken wird noch verstärkt durch das Gefühl, dass die Wahrscheinlichkeit sehr gering ist, dass am Ende der Aufwand tatsächlich durch frische Zutaten aus dem eigenen Anbau belohnt wird, da im hektischen städtischen Alltag nicht gewährleistet werden kann, dass die Pflege der Pflanzen so optimal ist, dass sie zu guten Ergebnissen führt.

Im Sinne des aufgeklärten Verbrauchers, der sich bewusst gesund ernähren will und dabei auf Nachhaltigkeit bedacht ist, aber weder die räumlichen noch die zeitlichen Möglichkeiten zum Anbau von Pflanzen in herkömmlicher Weise hat, ist es also wünschenswert, eine Möglichkeit zu schaffen, mithilfe derer sich auch Kleinverbraucher, wie beispielsweise der typische moderne Single-Städter, im gewünschten Umfang selbständig mit frischen Nahrungszutaten versorgen können.

Im Sinne dieser Anforderungen wurde kürzlich eine Vorrichtung vorgestellt, mit Hilfe derer auch Einzelverbraucher in einem kleinen, an übliche Küchengrößen angepassten Maßstab Kräuter, Salate, Gemüse, Pilze oder Obst frisch ziehen können (siehe bspw. DE 10 2015 118 059 A1).

Besonders problematisch bei einer derartigen Aufzucht von Pflanzen ist, dass diese neben der Versorgung mit Wasser und Nährstoffen weitere Umgebungsbedingungen benötigen, die dem Pflanzenwachstum förderlich sind, wobei diese Umgebungsbedingungen von Pflanzenart zu Pflanzenart sowie im Verlauf des Keimens und Wachsens der Pflanzen variiert. Dabei müssen die Temperatur und die Feuchte der umgebenden Luft ständig kontrolliert und geregelt werden. Hierbei ist eine weitgehende Automatisierung der Umgebungsbedingungen in der Vorrichtung zur Aufzucht von Pflanzen wünschenswert.

In verschiedenen Ausführungsbeispielen wird eine Vorrichtung zur Aufzucht von Pflanzen bereitgestellt, die eine Bewässerungsvorrichtung, eine Beleuchtungsvorrichtung, eine Klimatisierungseinrichtung, einen Aufnahmeraum zum Aufnehmen einer oder mehrerer Saatmatten und eine Steuerungseinheit, die eingerichtet ist, mittels einer Programmsteuerung die Bewässerungsvorrichtung, die Beleuchtungsvorrichtung und die Klimatisierungseinrichtung zu steuern, aufweist. Des Weiteren weist die Vorrichtung zur Aufzucht von Pflanzen mindestens einen Luftfeuchte-Sensor zum Ermitteln der Luftfeuchtigkeit in dem Aufnahmeraum und mindestens einen Temperatursensor zum Ermitteln der Lufttemperatur in dem Aufnahmeraum auf.

Die Steuerungseinheit kann dazu eingerichtet sein, Messwerte von dem Luftfeuchte-Sensor und von dem Temperatursensor zu empfangen.

In verschiedenen Ausführungsbeispielen ist die Steuerungseinheit dazu eingerichtet, auf Basis der für die Luftfeuchtigkeit und für die Lufttemperatur ermittelten Sensorwerte mittels der Klimatisierungseinrichtung ein in dem Aufnahmeraum herrschendes Innenraumklima zu regeln.

Die Steuerungseinheit kann eingerichtet sein, die Lufttemperatur basierend auf den ermittelten Temperatursensorwerten zu regeln.

In verschiedenen Ausführungsbeispielen weist die Klimatisierungseinrichtung ferner ein Kühlaggregat zum Einstellen der Lufttemperatur und der Luftfeuchtigkeit in dem Aufnahmeraum auf, wobei das Kühlaggregat optional einen Verdampfer aufweist.

In verschiedenen Ausführungsbeispielen ist die Steuerungseinheit eingerichtet, die Lufttemperatur in dem Aufnahmeraum mittels des Kühlaggregats abzusenken.

Die Steuerungseinheit kann eingerichtet sein, die Lufttemperatur in dem Aufnahmeraum mittels einer von der Beleuchtungsvorrichtung abgestrahlten Lichtmenge zu steuern bzw. zu regeln, anders ausgedrückt, zu verändern.

In verschiedenen Ausführungsbeispielen ist die Steuerungseinheit eingerichtet, die Luftfeuchtigkeit in dem Aufnahmeraum mittels des Verdampfers zu regeln.

In verschiedenen Ausführungsbeispielen weist die Klimatisierungseinrichtung ein Frischluftgebläse auf.

In verschiedenen Ausführungsbeispielen weisen Einlassöffnungen des Frischluftgebläses und/oder Luftaustrittsöffnungen der Vorrichtung Aktivkohlefilter auf.

In verschiedenen Ausführungsbeispielen weist die Klimatisierungseinrichtung mindestens ein Kühlgebläse zum Kühlen von in dem Aufnahmeraum befindlicher Luft auf.

In verschiedenen Ausführungsbeispielen weist die Vorrichtung ferner eine oder mehrere Aufzuchteinheiten, die in den Aufnahmeraum eingebracht werden, auf, wobei jede Aufzuchteinheit ein Stockwerk in dem Aufnahmeraum bildet, wobei jede Aufzuchteinheit eine Bewässerungswanne, ein LED-Modul, einen oder mehrere Mattenträger und eine oder mehrere Saatmatten aufweist, und wobei jede der Saatmatten Saatgut aufweist.

In verschiedenen Ausführungsbeispielen weist die Klimatisierungseinrichtung ein Kühlgebläse für jedes Stockwerk und ein LED-Kühlgebläse für jedes LED-Modul auf.

In verschiedenen Ausführungsbeispielen weist die Programmsteuerung individuell auf in dem Aufnahmeraum aufgenommenes Saatgut abgestimmte Klimatisierungsdaten auf.

In verschiedenen Ausführungsbeispielen ist für die Programmsteuerung ein Datenspeicher vorgesehen, aus welchem die individuell auf das Saatgut abgestimmten Klimatisierungsdaten und/oder Bewässerungsdaten und/oder Beleuchtungsdaten abrufbar sind, wobei vorzugsweise der Datenspeicher über eine in der Vorrichtung vorgesehene Internetverbindung als externer Datenspeicher vorgesehen ist.

In verschiedenen Ausführungsbeispielen weist die Vorrichtung mindestens einen Programmsensor auf, wobei der Programmsensor als RFID-Sensor und/oder QR-Code Sensor und/oder Barcode-Sensor vorgesehen ist, welcher RFID-Signale bzw. eine QR-Kennzeichnung bzw. einen Barcode von mindestens einer Saatmatte zur Steuerung der Programmsteuerung erfassen kann.

In verschiedenen Ausführungsbeispielen ist die Steuerungseinheit eingerichtet, mittels der Programmsteuerung auf Basis der Klimatisierungsdaten ein auf das Saatgut in der entsprechenden Aufzuchteinheit abgestimmtes Innenraumklima einzustellen.

In verschiedenen Ausführungsbeispielen ist die Steuerungseinheit eingerichtet, die Bewässerungsvorrichtung, die Beleuchtungsvorrichtung und die Klimatisierungseinrichtung derart zu steuern, dass ein auf das Saatgut in der entsprechenden Aufzuchteinheit abgestimmtes Kleinraumklima eingestellt wird.

In verschiedenen Ausführungsbeispielen ist die Bewässerungsvorrichtung dazu eingerichtet, der einen oder mehreren Bewässerungswannen, die in jeder der Aufzuchteinheiten unter den jeweiligen Saatmatten angeordnet sind, Wasser und Nährstoffe zuzuführen.

In verschiedenen Ausführungsbeispielen weist die Vorrichtung ferner eine Kamera zum Aufnehmen von Bildern der in dem Aufnahmeraum aufgenommenen Saatmatten und von aus dem Saatgut entstehenden Pflanzen auf.

In verschiedenen Ausführungsbeispielen weist die Steuerungseinheit eine Mustererkennungsvorrichtung und einen zugehörigen Mustererkennungsspeicher auf und ist dazu eingerichtet, Signale von der Kamera zur Programmsteuerung weiterzuleiten.

In verschiedenen Ausführungsbeispielen ist die Steuerungseinheit ferner dazu eingerichtet, mittels der Mustererkennungsvorrichtung die mittels der Kamera aufgenommenen Bilder mit einem oder mehreren in dem Mustererkennungsspeicher gespeicherten Referenzbildern zu vergleichen zum Ermitteln eines Zustands der in dem Aufnahmeraum aufgenommenen Pflanzen, um somit die Programmsteuerung auf den Zustand der Pflanzen anzupassen.

In verschiedenen Ausführungsbeispielen ist die Steuerungseinheit dazu eingerichtet, die Bewässerungsvorrichtung, die Beleuchtungsvorrichtung und die Klimatisierungseinrichtung derart zu steuern, dass ein auf die jeweiligen in der Aufzuchteinheit wachsenden Pflanzen und ihren Zustand abgestimmtes Innenraumklima angepasst wird.

In verschiedenen Ausführungsbeispielen weist die Vorrichtung ferner einen Tür-Sensor zum Ermitteln, ob eine Tür der Vorrichtung geöffnet oder geschlossen ist, auf, wobei der Tür-Sensor optional ein IR-Sensor ist.

In verschiedenen Ausführungsbeispielen ist die Steuerungseinheit dazu eingerichtet, Signale von dem Tür-Sensor zu empfangen.

In verschiedenen Ausführungsbeispielen ist die Steuerungseinheit dazu eingerichtet, bei geöffneter Tür die Beleuchtungsvorrichtung derart anzusteuern, dass Licht einer für den Nutzer sichtbaren spektralen Zusammensetzung abgestrahlt wird, die Bewässerungsvorrichtung derart anzusteuern, dass den Bewässerungswannen kein Wasser zugeführt wird, und die Klimatisierungseinrichtung derart anzusteuern, dass das mindestens eine Kühlgebläse abgeschaltet wird, und wobei die Steuerungseinheit dazu eingerichtet ist, bei geschlossener Tür die Bewässerungsvorrichtung, die Beleuchtungsvorrichtung und die Klimatisierungseinrichtung derart anzusteuern, dass das auf die jeweiligen in der Aufzuchteinheit wachsenden Pflanzen und ihren Zustand abgestimmte Innenraumklima hergestellt wird.

In verschiedenen Ausführungsbeispielen wird ein Verfahren zur Aufzucht von Pflanzen bereitgestellt, das Einbringen einer oder mehrerer Saatmatten in einen Aufnahmeraum einer Vorrichtung zur Aufzucht von Pflanzen, Ansteuern einer Bewässerungsvorrichtung, einer Beleuchtungsvorrichtung und einer Klimatisierungseinrichtung der Vorrichtung zur Aufzucht von Pflanzen mittels einer Programmsteuerung einer Steuerungseinheit, Ermitteln der Luftfeuchtigkeit in dem Aufnahmeraum mittels mindestens eines Luftfeuchte-Sensors und Ermitteln der Lufttemperatur in dem Aufnahmeraum mittels mindestens eines Temperatursensors.

In verschiedenen Ausführungsbeispielen weist das Verfahren ferner Zuführen von Messwerten von dem Luftfeuchte-Sensor und von dem Temperatursensor zu der Steuerungseinheit auf.

In verschiedenen Ausführungsbeispielen weist das Verfahren ferner Regeln eines in dem Aufnahmeraum herrschenden Innenraumklimas mittels der Klimatisierungseinrichtung auf Basis der für die Luftfeuchtigkeit und für die Lufttemperatur ermittelten Sensorwerte mittels der Steuerungseinheit auf.

In verschiedenen Ausführungsbeispielen regelt die Steuerungseinheit die Lufttemperatur basierend auf den ermittelten Temperatursensorwerten.

In verschiedenen Ausführungsbeispielen werden die Lufttemperatur und die Luftfeuchtigkeit in dem Aufnahmeraum mittels eines Kühlaggregats der Klimatisierungseinrichtung eingestellt, wobei das Kühlaggregat optional einen Verdampfer aufweist.

In verschiedenen Ausführungsbeispielen senkt die Steuerungseinheit die Lufttemperatur in dem Aufnahmeraum mittels des Kühlaggregats ab.

In verschiedenen Ausführungsbeispielen erhöht die Steuerungseinheit die Lufttemperatur in dem Aufnahmeraum mittels einer von der Beleuchtungsvorrichtung abgestrahlten Wärmemenge.

In verschiedenen Ausführungsbeispielen regelt die Steuerungseinheit die Luftfeuchtigkeit in dem Aufnahmeraum mittels des Verdampfers.

In verschiedenen Ausführungsbeispielen weist das Verfahren ferner Umwälzen von Luft in dem Aufnahmeraum mittels mindestens eines Gebläses der Klimatisierungseinrichtung und Zuführen von Frischluft mittels mindestens eines Frischluftgebläses der Klimatisierungseinrichtung auf.

In verschiedenen Ausführungsbeispielen weist das Verfahren ferner Reinigen der mittels des Frischluftgebläses zugeführten Frischluft an Einlassöffnungen des Frischluftgebläses und/oder an Luftaustrittsöffnungen der Vorrichtung mittels Aktivkohlefilter auf.

In verschiedenen Ausführungsbeispielen weist das Verfahren ferner Kühlen von in dem Aufnahmeraum befindlicher Luft mittels mindestens eines Kühlgebläses der Klimatisierungseinrichtung auf.

In verschiedenen Ausführungsbeispielen weist das Verfahren ferner Einbringen einer oder mehrerer Aufzuchteinheiten in den Aufnahmeraum, wobei jede Aufzuchteinheit ein Stockwerk in dem Aufnahmeraum bildet, und wobei jede Aufzuchteinheit eine Bewässerungswanne, mindestens ein LED-Modul und einen oder mehrere Mattenträger aufweist, und Auflegen einer oder mehrerer Saatmatten auf jeden der Mattenträger auf, wobei jede der Saatmatten Saatgut aufweist.

In verschiedenen Ausführungsbeispielen weist das Verfahren ferner Kühlen der Luft in jedem Stockwerk mittels eines Kühlgebläses und Kühlen jedes LED-Moduls mittels mindestens eines LED-Kühlgebläses auf.

In verschiedenen Ausführungsbeispielen regelt die Steuerungseinheit das Innenraumklima in jedem Stockwerk mittels individuell auf das in dem Aufnahmeraum aufgenommene Saatgut abgestimmter Klimatisierungsdaten der Programmsteuerung.

In verschiedenen Ausführungsbeispielen weist das Verfahren ferner Abrufen von individuell auf das Saatgut abgestimmten Beleuchtungsdaten und/oder Bewässerungsdaten und/oder Klimatisierungsdaten aus einem Datenspeicher der Programmsteuerung auf, wobei vorzugsweise der Datenspeicher über eine in der Vorrichtung zur Aufzucht von Pflanzen vorgesehene Internetverbindung als externer Datenspeicher vorgesehen ist.

In verschiedenen Ausführungsbeispielen weist das Verfahren ferner Erfassen von RFID-Signalen und/oder einer QR-Kennzeichnung und/oder eines Barcodes von mindestens einer Saatmatte mittels eines Programmsensors zur Steuerung der Programmsteuerung auf, wobei der Programmsensor als RFID-Sensor und/oder QR-Code Sensor und/oder Barcode-Sensor vorgesehen ist.

In verschiedenen Ausführungsbeispielen stellt die Steuerungseinheit mittels der Programmsteuerung auf Basis der Klimatisierungsdaten ein auf das Saatgut in der entsprechenden Aufzuchteinheit abgestimmtes Innenraumklima ein.

In verschiedenen Ausführungsbeispielen steuert die Steuerungseinheit die Bewässerungsvorrichtung, die Beleuchtungsvorrichtung und die Klimatisierungseinrichtung derart an, dass ein auf das Saatgut in der entsprechenden Aufzuchteinheit abgestimmtes Kleinraumklima eingestellt wird.

In verschiedenen Ausführungsbeispielen führt die Bewässerungsvorrichtung der einen oder mehreren Bewässerungswannen, die in jeder der Aufzuchteinheiten unter den jeweiligen Saatmatten angeordnet sind, Wasser und Nährstoffe zu.

In verschiedenen Ausführungsbeispielen weist das Verfahren ferner aufweisend Aufnehmen von Bildern von aus dem in den Aufnahmeraum eingebrachten Saatgut entstehenden Pflanzen mittels einer Kamera auf.

In verschiedenen Ausführungsbeispielen weist das Verfahren ferner Weiterleiten von Signalen von der Kamera zur Programmsteuerung, Vergleichen der mittels der Kamera aufgenommenen Bilder mit einem oder mehreren in einem Mustererkennungsspeicher der Steuerungseinheit gespeicherten Referenzbildern zum Ermitteln eines Zustands der in dem Aufnahmeraum aufgenommenen Pflanzen mittels einer Mustererkennungsvorrichtung der Steuerungseinheit und Anpassen der Programmsteuerung an die jeweilige Pflanze und ihren Zustand auf.

In verschiedenen Ausführungsbeispielen steuert die Steuerungseinheit die Bewässerungsvorrichtung, die Beleuchtungsvorrichtung und die Klimatisierungseinrichtung derart an, dass ein auf die jeweiligen in der Aufzuchteinheit wachsenden Pflanzen und ihren Zustand abgestimmtes Innenraumklima hergestellt wird.

In verschiedenen Ausführungsbeispielen weist das Verfahren ferner Ermitteln, ob eine Tür der Vorrichtung geöffnet oder geschlossen ist, mittels eines Tür-Sensors, auf, wobei der Tür-Sensor optional ein IR-Sensor ist.

In verschiedenen Ausführungsbeispielen empfängt die Steuerungseinheit Signale von dem Tür-Sensor.

In verschiedenen Ausführungsbeispielen steuert die Steuerungseinheit bei geöffneter Tür die Beleuchtungsvorrichtung derart an, dass Licht einer für den Nutzer sichtbaren spektralen Zusammensetzung abgestrahlt wird, die Klimatisierungseinrichtung derart, dass das mindestens eine Kühlgebläse abgeschaltet wird, und die Bewässerungsvorrichtung derart, dass den Bewässerungswannen kein Wasser zugeführt wird, und steuert die Steuerungseinheit bei geschlossener Tür die Bewässerungsvorrichtung, die Beleuchtungsvorrichtung und die Klimatisierungseinrichtung derart an, dass das auf die jeweiligen in der Aufzuchteinheit wachsenden Pflanzen und ihren Zustand abgestimmte Kleinraumklima hergestellt wird.

Ausführungsbeispiele der Erfindung sind in den Figuren dargestellt und werden im Folgenden näher erläutert.

Es zeigen
- Figur 1: eine Vorrichtung zur Aufzucht von Pflanzen gemäß verschiedenen Ausführungsbeispielen;
- Figur 2A: eine Aufzuchteinheit zum Einbringen in die Vorrichtung zur Aufzucht von Pflanzen gemäß verschiedenen Ausführungsbeispielen;
- Figur 2B: eine Bewässerungswanne einer Aufzuchteinheit gemäß verschiedenen Ausführungsbeispielen;
- Figur 2C: einen Mattenträger zum Einsetzen auf eine Bewässerungswanne gemäß verschiedenen Ausführungsbeispielen;
- Figur 2D: eine Saatmatte zum Auflegen auf einen Mattenträger gemäß verschiedenen Ausführungsbeispielen;
- Figur 3: eine Ansicht der Vorrichtung zur Aufzucht von Pflanzen gemäß verschiedenen Ausführungsbeispielen aus einer halbfrontalen Perspektive;
- Figur 4: eine Querschnittansicht der Vorrichtung zur Aufzucht von Pflanzen gemäß verschiedenen Ausführungsbeispielen aus einer seitlichen Perspektive;
- Figur 5: eine Darstellung einer Klimatisierungseinrichtung gemäß verschiedenen Ausführungsbeispielen;
- Figur 6A: eine Darstellung zum Erläutern der Luftbewegung zum Klimatisieren eines Aufnahmeraums der Vorrichtung zur Aufzucht von Pflanzen gemäß verschiedenen Ausführungsbeispielen;
- Figur 6B: eine weitere Darstellung zum Erläutern der Luftbewegung zum Klimatisieren des Aufnahmeraums der Vorrichtung zur Aufzucht von Pflanzen gemäß verschiedenen Ausführungsbeispielen;
- Figur 6C: eine weitere Darstellung zum Erläutern der Luftbewegung zum Klimatisieren des Aufnahmeraums der Vorrichtung zur Aufzucht von Pflanzen gemäß verschiedenen Ausführungsbeispielen;
- Figur 7: eine Darstellung eines Gehäuses der Vorrichtung zur Aufzucht von Pflanzen gemäß verschiedenen Ausführungsbeispielen aus einer halbfrontalen Perspektive;
- Figur 8: ein Ablaufdiagramm eines Verfahrens zur Aufzucht von Pflanzen gemäß verschiedenen Ausführungsbeispielen.

In der folgenden ausführlichen Beschreibung wird auf die beigefügten Zeichnungen Bezug genommen, die Teil dieser Anmeldung bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekoppelt" verwendet zum Beschreiben sowohl einer direkten als auch einer indirekten Verbindung, eines direkten oder indirekten Anschlusses sowie einer direkten oder indirekten Kopplung. In den Figuren werden identische oder ähnliche Elemente mit identischen Bezugszeichen versehen, soweit dies zweckmäßig ist.

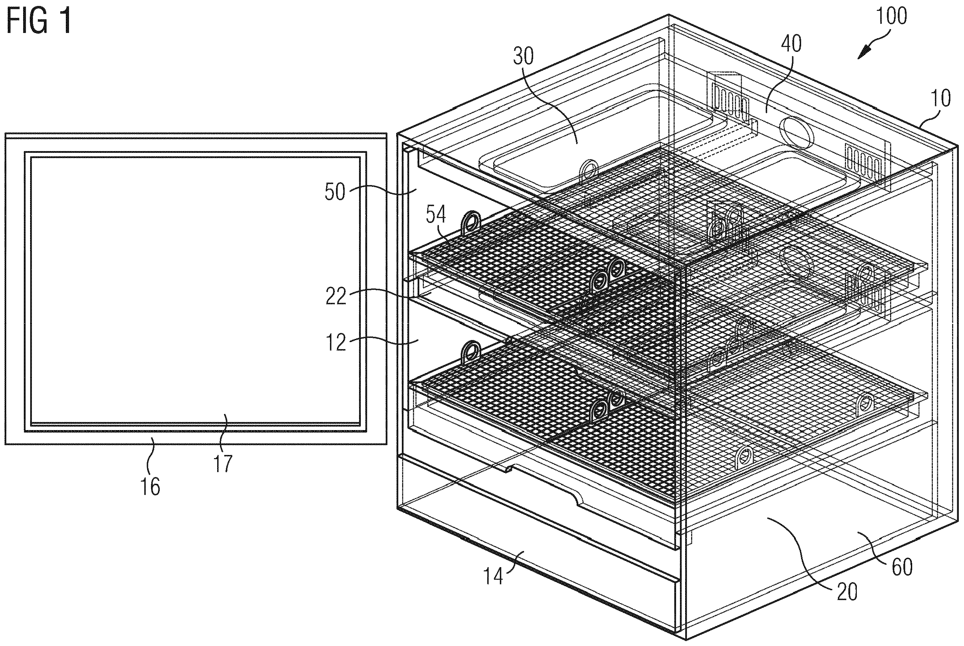

Eine Vorrichtung zur Aufzucht von Pflanzen gemäß verschiedenen Ausführungsbeispielen ist in Fig.1 dargestellt.

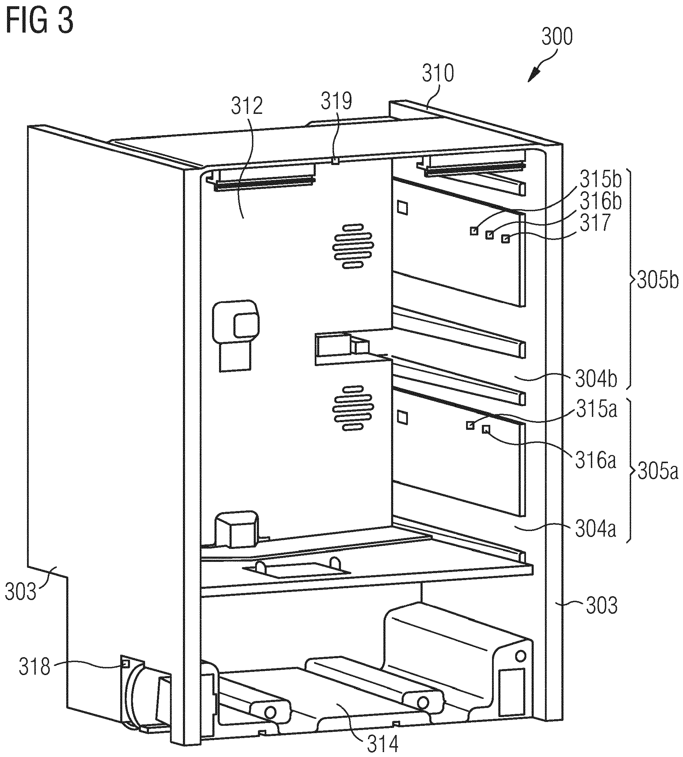

Wie in Fig.1 dargestellt, kann die Vorrichtung zur Aufzucht von Pflanzen 100 ein schrankartiges Gehäuse 10 aufweisen, das mit einem Aufnahmeraum 12, einem Sockel 14 und einer Tür 16, die eine Beobachtungsöffnung 17 aufweisen kann, ausgestattet sein kann. Des Weiteren kann die Vorrichtung eine Bewässerungsvorrichtung 20, mindestens eine Beleuchtungsvorrichtung 30 und eine Klimatisierungseinrichtung 40 aufweisen. Ferner kann in der Vorrichtung eine Steuerungseinheit 60 vorgesehen sein, die vorzugsweise in dem Sockel 14 der Vorrichtung untergebracht sein kann, wobei die Steuerungseinheit 60 mittels einer Programmsteuerung die Beleuchtungsvorrichtung 30, die Klimatisierungseinrichtung 40 und die Bewässerungsvorrichtung 20 ansteuern kann. Die Klimatisierungseinrichtung 40 wird unter Bezugnahme auf Fig.3 bis Fig.7 genauer beschrieben werden.

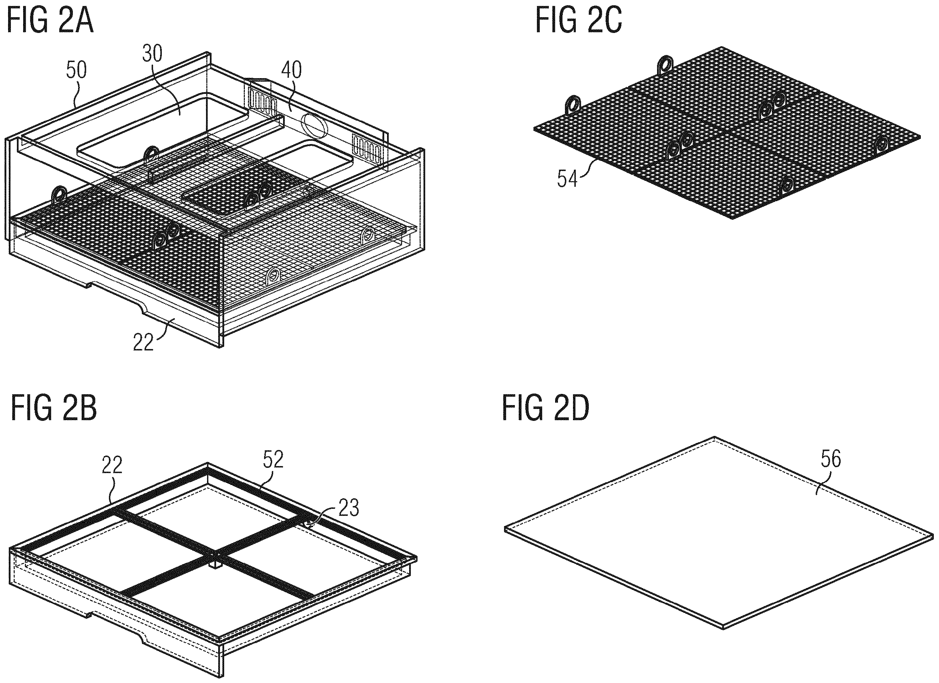

In den Aufnahmeraum 12 der Vorrichtung zur Aufzucht von Pflanzen können, je nach Größe der Vorrichtung, eine oder mehrere schubladenartig ausgebildete Aufzuchteinheiten 50 eingebracht werden. Die Aufzuchteinheiten 50 können jeweils eine Bewässerungswanne 22 und einen oder mehrere Mattenträger 54 aufweisen und werden unter Bezugnahme auf Fig.2A bis Fig.2D genauer beschrieben werden.

Fig.2A zeigt eine Aufzuchteinheit zum Einbringen in die Vorrichtung zur Aufzucht von Pflanzen gemäß verschiedenen Ausführungsbeispielen. Fig.2B zeigt eine Bewässerungswanne einer Aufzuchteinheit gemäß verschiedenen Ausführungsbeispielen. Fig.2C zeigt einen Mattenträger zum Einsetzen auf eine Bewässerungswanne gemäß verschiedenen Ausführungsbeispielen. Fig.2D zeigt eine Saatmatte zum Auflegen auf einen Mattenträger gemäß verschiedenen Ausführungsbeispielen

Wie in Fig.2A dargestellt, kann jede Aufzuchteinheit 50 aus einer Bewässerungswanne 22 mit einer dazugehörigen, darüber angeordneten Beleuchtungsvorrichtung 30 und einem dazugehörigen, an einer Rückseite der Aufzuchteinheit 50 angeordneten Bauteil der Klimatisierungseinrichtung 40 (beispielsweise einem Anschluss an die Klimatisierungseinrichtung 40 oder einem anderen Bauteile der Klimatisierungseinrichtung 40) bestehen. Dabei kann jede Aufzuchteinheit 50 sozusagen ein Stockwerk definieren, in das Saatgut und/oder Pflanzen in den Aufnahmeraum 12 der Vorrichtung eingebracht und dort aufgezogen werden können. Für diesen Zweck kann, wie in Fig.2B dargestellt, jede der Bewässerungswannen 22 eine vorzugsweise in sich unterteilte, rahmenartige Struktur aufweisen, die ein bis vier Einlegeöffnungen 52 bilden kann. Auf die rahmenartige Struktur der Einlegeöffnungen 52 können ein bis vier Mattenträger 54 (Fig.2C) unterschiedlicher Größe aufgelegt werden, die wiederum mit entsprechenden Saatmatten 56 (Fig.2D) bestückt werden können (anders ausgedrückt auf die entsprechende Saatmatten 56 aufgelegt werden können). Zudem kann jede Bewässerungswanne 22 einen Wasser-Zulauf und - Ablauf 23 aufweisen.

Gemäß verschiedenen Ausführungsbeispielen kann die Bewässerungsvorrichtung 20 (siehe Fig.1) dazu eingerichtet sein, das für das Pflanzenwachstum notwendige Wasser mittels des Wasser-Zulaufs und -Ablaufs 23 (siehe Fig.2B) in die Bewässerungswanne 22 einzulassen bzw. daraus zu entfernen. Dafür kann die Bewässerungsvorrichtung 20 gemäß verschiedenen Ausführungsbeispielen ein Wasserkreislaufsystem (nicht dargestellt) aufweisen, mittels dessen Wasser den Bewässerungswannen 22 aus einem in dem Sockel 14 angeordneten Wassertank (nicht dargestellt) zugeführt werden kann. Die Bewässerungsvorrichtung 20 kann in verschiedenen Ausführungsbeispielen auch dazu eingerichtet sein, dem Wasser in dem Wasserkreislaufsystem verschiedene Nährstoffe zuzuführen (nicht dargestellt). Außerdem kann die Bewässerungsvorrichtung 20 in verschiedenen Ausführungsbeispielen dazu eingerichtet sein, das Wasser in dem Wasserkreislaufsystem zu reinigen und/oder zu filtern (nicht dargestellt).

Fig.3 zeigt eine Ansicht der Vorrichtung zur Aufzucht von Pflanzen gemäß verschiedenen Ausführungsbeispielen aus einer halbfrontalen Perspektive.

Wie in Fig.3 dargestellt, weist die Vorrichtung zur Aufzucht von Pflanzen 300 in verschiedenen Ausführungsbeispielen ein schrankartiges Gehäuse 310 auf, das hier aus einer halbfrontalen Perspektive dargestellt ist. Eine Tür des Gehäuses 310 ist der Einfachheit halber in dieser Darstellung weggelassen.

Das Gehäuse 310 kann einen Sockel 314 aufweisen, in den beispielsweise ein Wassertank (nicht dargestellt) einer Bewässerungsvorrichtung 20 (nicht dargestellt, siehe Fig.1) aufgenommen sein kann. An einer Seitenwand 303 des Gehäuses 310 kann ein Temperatursensor 318 zum Ermitteln einer Umgebungstemperatur bereitgestellt sein. Beispielsweise kann der Temperatursensor an einer Außenseite der Seitenwand 303 des Gehäuses 310 angeordnet sein.

Das Gehäuse 310 weist einen Aufnahmeraum 312 auf, der dazu eingerichtet sein kann, mindestens eine schubladenartige Aufzuchteinheit (nicht dargestellt, siehe Fig.2A-2D) aufzunehmen. Jede der Aufzuchteinheiten kann dabei dazu eingerichtet sein, dass jeweils mindestens eine Saatmatte aufgelegt werden kann. Anders ausgedrückt kann der Aufnahmeraum dazu eingerichtet sein, eine oder mehrere Saatmatten aufzunehmen.

Die Vorrichtung zur Aufzucht von Pflanzen kann ferner eine Steuerungseinheit 60 (nicht dargestellt, siehe Fig.1) aufweisen. Des Weiteren kann die Vorrichtung die Bewässerungsvorrichtung 20 (nicht dargestellt, siehe Fig.1), mindestens eine Beleuchtungsvorrichtung 30 (nicht dargestellt, siehe Fig.1) und eine Klimatisierungseinrichtung 40 (nicht dargestellt, siehe Fig.1) aufweisen. Die Steuerungseinheit kann dazu eingerichtet sein, mittels einer Programmsteuerung die Beleuchtungsvorrichtung, die Klimatisierungseinrichtung und die Bewässerungsvorrichtung anzusteuern.

Wie aus Fig.3 ersichtlich, können Seitenwände 303 des Gehäuses 310 zum Aufnehmen der Aufzuchteinheiten (nicht dargestellt) Führungsleisten 304 aufweisen. Beispielsweise können eine oder mehrere Führungsleisten 304 derart an jeder der Seitenwände 303 angeordnet sein, dass eine oder mehrere Aufzuchteinheiten (nicht dargestellt) in dem Aufnahmeraum 312 stockwerkartig übereinander angeordnet sein können. Beispielsweise kann eine Vorrichtung zur Aufzucht von Pflanzen 300 in dem Aufnahmeraum 312 ein unteres Stockwerk 305a und ein oberes Stockwerk 305b aufweisen. Anders ausgedrückt kann beispielsweise jeweils eine Aufzuchteinheit (nicht dargestellt) mittels der ersten Führungsleisten 304a und/oder der zweiten Führungsleisten 304b derart in den Aufnahmeraum 312 eingebracht werden, dass ein unteres Stockwerk 305a und/oder ein oberes Stockwerk 305b gebildet wird.

Die Seitenwände 303 des Gehäuses 310 können ferner verschiedene Sensoren der Klimatisierungseinrichtung aufweisen. Beispielsweise können in den Seitenwänden 303 mindestens ein Luftfeuchte-Sensor 315 zum Ermitteln der Luftfeuchtigkeit in dem Aufnahmeraum 312, mindestens ein Temperatursensor 316 zum Ermitteln einer Lufttemperatur in dem Aufnahmeraum 312 und ein CO₂-Sensor 317 zum Ermitteln eines CO₂-Gehalts der Luft in dem Aufnahmeraum 312 angeordnet sein. Beispielsweise kann das untere Stockwerk 305a einen ersten Luftfeuchte-Sensor 315a und einen ersten Temperatursensor 316a aufweisen, und das obere Stockwerk 305b kann einen zweiten Luftfeuchte-Sensor 315b und einen zweiten Temperatursensor 316b aufweisen. Das obere Stockwerk 305b kann außerdem den CO₂-Sensor 317 aufweisen, wie in Fig.3 dargestellt. Alternativ kann der CO₂-Sensor 317 auch in dem unteren Stockwerk 305a angeordnet sein (nicht dargestellt).

Alternativ können der erste Luftfeuchte-Sensor 315a und der erste Temperatursensor 316a als ein kombinierter Luftfeuchte-Temperatur-Sensor (nicht dargestellt) ausgeführt, anders ausgedrückt ausgebildet, sein. Ebenso können der zweite Luftfeuchte-Sensor 315b und der zweite Temperatursensor 316b als ein kombinierter Luftfeuchte-Temperatur-Sensor (nicht dargestellt) ausgeführt, anders ausgedrückt ausgebildet, sein. Außerdem können ein Luftfeuchte-Sensor, ein Temperatursensor und der CO₂-Sensor als ein kombinierter Luftfeuchte-Temperatur-CO₂-Sensor (nicht dargestellt) ausgeführt sein.

Die Steuerungseinheit kann insbesondere dazu eingerichtet sein, von den verschiedenen Sensoren 315, 316, 317, 318 ermittelte Messwerte, anders ausgedrückt von den verschiedenen Sensoren 315, 316, 317, 318 ermittelte Sensorwerte, zu empfangen. Beispielsweise kann die Steuerungseinheit 60 dazu eingerichtet sein, von den Luftfeuchte-Sensoren 315a, 315b Messwerte bzw. Sensorwerte für die in dem jeweiligen Stockwerk 305a, 305b ermittelte Luftfeuchtigkeit zu empfangen. Ebenso kann die Steuerungseinheit 60 dazu eingerichtet sein, von den Temperatursensoren 316a, 316b Messwerte bzw. Sensorwerte für die in dem jeweiligen Stockwerk 305a, 305b ermittelte Lufttemperatur zu empfangen. Die Steuerungseinheit 60 kann auch dazu eingerichtet sein, von dem CO₂-Sensor 317 Messwerte bzw. Sensorwerte für den in dem Aufnahmeraum 312 ermittelten CO₂-Gehalt zu empfangen. Außerdem kann die Steuerungseinheit 60 dazu eingerichtet sein, Messwerte bzw. Sensorwerte von dem Temperatursensor 318 zum Ermitteln der Umgebungstemperatur zu empfangen.

Wie oben bereits ausgeführt, kann die Steuerungseinheit 60 ferner dazu eingerichtet sein, mittels der Programmsteuerung die Bewässerungsvorrichtung 20, die Beleuchtungsvorrichtung 30 und die Klimatisierungsvorrichtung 40 der Vorrichtung 300 zu steuern. Beispielsweise kann die Steuerungseinheit 60 dazu eingerichtet sein, auf Basis der für die Luftfeuchtigkeit und für die Lufttemperatur in dem Aufnahmeraum 312 ermittelten Sensorwerte mittels der Klimatisierungseinrichtung 40 ein in dem Aufnahmeraum 312 herrschendes Innenraumklima zu regeln. Insbesondere kann die Steuerungseinheit 60 dazu eingerichtet sein, auf Basis der für die Luftfeuchtigkeit und für die Lufttemperatur des jeweiligen Stockwerks 305a, 305b ermittelten Sensorwerte mittels der Klimatisierungseinrichtung 40 ein in dem jeweiligen Stockwerk 305a, 305b herrschendes Kleinraumklima zu regeln.

Anders ausgedrückt kann die Steuerungseinheit 60 dazu eingerichtet sein, basierend auf den Sensorwerten der Sensoren 315, 316 eine Lufttemperatur und eine Luftfeuchtigkeit in dem Aufnahmeraum 312 einzustellen. Beispielsweise kann die Steuerungseinheit dazu eingerichtet sein, basierend auf den von den Temperatursensoren 315a, 315b und den Luftfeuchte-Sensoren 316a, 316b ermittelten Sensorwerten, anders ausgedrückt basierend auf den ermittelten Temperatursensorwerten und den ermittelten Luftfeuchte-Sensorwerten, ein Klima in dem Aufnahmeraum 312 bzw. in einem einzelnen Stockwerk 305a, 305b einzustellen.

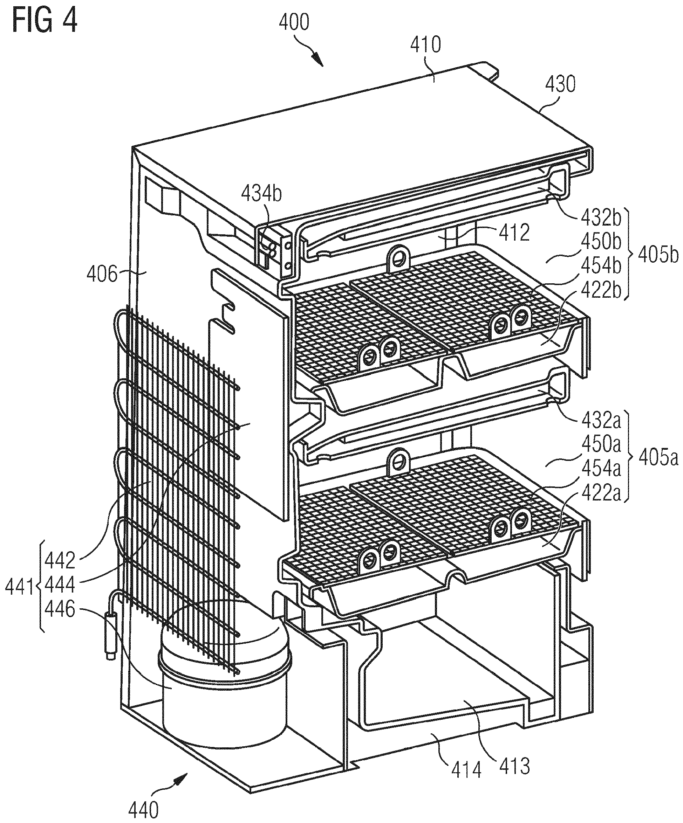

Die Steuerungseinheit 60 kann beispielsweise dazu eingerichtet sein, die Klimatisierungseinrichtung 30 (nicht dargestellt) derart anzusteuern, dass die Lufttemperatur basierend auf den ermittelten Temperatursensorwerten geregelt wird. Dafür kann die Klimatisierungseinrichtung 30 beispielsweise ein Kühlaggregat aufweisen (nicht dargestellt, siehe bspw. Fig.4, Bezugszeichen 441), wobei das Kühlaggregat einen Kondensator (nicht dargestellt, siehe bspw. Fig.4, 442), einen Verdampfer (nicht dargestellt, siehe bspw. Fig.4, 444) und einen Kompressor (nicht dargestellt, siehe bspw. Fig.4, 446) aufweisen kann.

Die Steuerungseinrichtung 60 kann in verschiedenen Ausführungsbeispielen dazu eingerichtet sein, die Klimatisierungseinrichtung 40 beispielsweise derart anzusteuern, dass die Lufttemperatur in dem Aufnahmeraum 312 mittels des Kühlaggregats (nicht dargestellt) abgesenkt wird. Des Weiteren kann die Steuerungseinrichtung 60 dazu eingerichtet sein, die Lufttemperatur in dem Aufnahmeraum 312 beispielsweise mittels einer von der Beleuchtungsvorrichtung 30 (nicht dargestellt, siehe Fig.1) abgestrahlten Wärmemenge zu erhöhen.

Des Weiteren kann die Steuerungseinrichtung 60 dazu eingerichtet sein, die Luftfeuchtigkeit in dem Aufnahmeraum 312 mittels des Verdampfers (nicht dargestellt) zu regeln.

Die Klimatisierungseinrichtung 40 kann ferner mindestens ein Kühlgebläse (nicht dargestellt) und mindestens ein LED-Kühlgebläse (nicht dargestellt) aufweisen. Die Steuerungseinheit 60 kann dazu eingerichtet sein, das Kühlgebläse der Klimatisierungseinrichtung derart anzusteuern, dass die Lufttemperatur in dem Aufnahmeraum geregelt wird. Außerdem kann die Steuerungseinheit dazu eingerichtet sein, das LED-Kühlgebläse der Klimatisierungseinrichtung derart anzusteuern, dass von LED-Modulen der Beleuchtungseinrichtung 30 abgestrahlte Wärme abgeführt wird. Das mindestens eine Kühlgebläse und das mindestens eine LED-Kühlgebläse wird unter Bezugnahme auf Fig.4 bis Fig.6C genauer beschrieben werden.

Das Gehäuse 310 kann ferner einen Tür-Sensor 319 aufweisen, wobei der Tür-Sensor 319 dazu eingerichtet ist zu ermitteln, ob eine Tür (nicht dargestellt, siehe Tür 16 der Fig.1) der Vorrichtung zur Aufzucht von Pflanzen 300 geöffnet oder geschlossen ist. Der Tür-Sensor 319 kann beispielsweise einen IR-Sensor 319 aufweisen. Signale des Tür-Sensors 319 können in verschiedenen Ausführungsbeispielen der Steuerungseinheit (nicht dargestellt) zugeführt werden. Anders ausgedrückt kann die Steuerungseinheit dazu eingerichtet sein, Signale des Tür-Sensors 319, ob die Tür der Vorrichtung geöffnet oder geschlossen ist, zu empfangen.

Die Steuerungseinheit (nicht dargestellt) kann in verschiedenen Ausführungsbeispielen dazu eingerichtet sein, bei geöffneter Tür die Bewässerungsvorrichtung, die Beleuchtungsvorrichtung und die Klimatisierungseinrichtung derart anzusteuern, dass der Nutzer in dem Aufnahmeraum beispielsweise mit den Saatmatten hantieren kann. Beispielsweise kann die Steuerungseinheit in verschiedenen Ausführungsbeispielen dazu eingerichtet sein, bei geöffneter Tür die Beleuchtungsvorrichtung derart anzusteuern, dass Licht mit einer spektralen Zusammensetzung abgestrahlt wird, so dass für einen Nutzer der Aufnahmeraum 312 normal ausgeleuchtet wird (anders ausgedrückt dass Licht einer für den Nutzer sichtbaren spektralen Zusammensetzung, wiederum anders ausgedrückt in einer spektralen Zusammensetzung, bei der der Nutzer gut sieht, abgestrahlt wird). Die Steuerungseinheit kann ferner beispielsweise dazu eingerichtet sein, bei geöffneter Tür die Bewässerungsvorrichtung derart anzusteuern, dass den Bewässerungswannen kein Wasser zugeführt wird. Des Weiteren kann die Steuerungseinheit beispielsweise dazu eingerichtet sein, bei geöffneter Tür die Klimatisierungseinrichtung derart anzusteuern, dass das mindestens eine Kühlgebläse abgeschaltet wird.

Ferner kann die Steuerungseinheit (nicht dargestellt) in verschiedenen Ausführungsbeispielen dazu eingerichtet sein, bei geschlossener Tür die Bewässerungsvorrichtung, die Beleuchtungsvorrichtung und die Klimatisierungseinrichtung derart anzusteuern, dass ein auf die jeweiligen in der Aufzuchteinheit wachsenden Pflanzen und ihren Zustand abgestimmtes Innenraumklima hergestellt wird. Beispielsweise kann die Steuerungseinheit dazu eingerichtet sein, bei geschlossener Tür die Beleuchtungsvorrichtung derart anzusteuern, dass die jeweiligen in dem Aufnahmeraum wachsenden Pflanzen mit spezifischem Licht einer ihr Wachstum fördernden spektralen Zusammensetzung bestrahlt werden. Ferner kann die Steuerungseinheit dazu eingerichtet sein, bei geschlossener Tür die Bewässerungsvorrichtung derart anzusteuern, dass dem auf den Saatmatten angeordneten Saatgut bzw. den daraus wachsenden Pflanzen entsprechend ihrem Zustand Wasser und Nährstoffe zugeführt werden. Des Weiteren kann die Steuerungseinheit dazu eingerichtet sein, bei geschlossener Tür die Klimatisierungseinrichtung derart anzusteuern, dass das mindestens eine Kühlgebläse eingeschaltet ist, wenn dies zur Aufrechterhaltung des für das auf den Saatmatten angeordnete Saatgut bzw. die daraus wachsenden Pflanzen entsprechend ihrem Zustand förderlichen Innenraumklimas in dem Aufnahmeraum erforderlich ist.

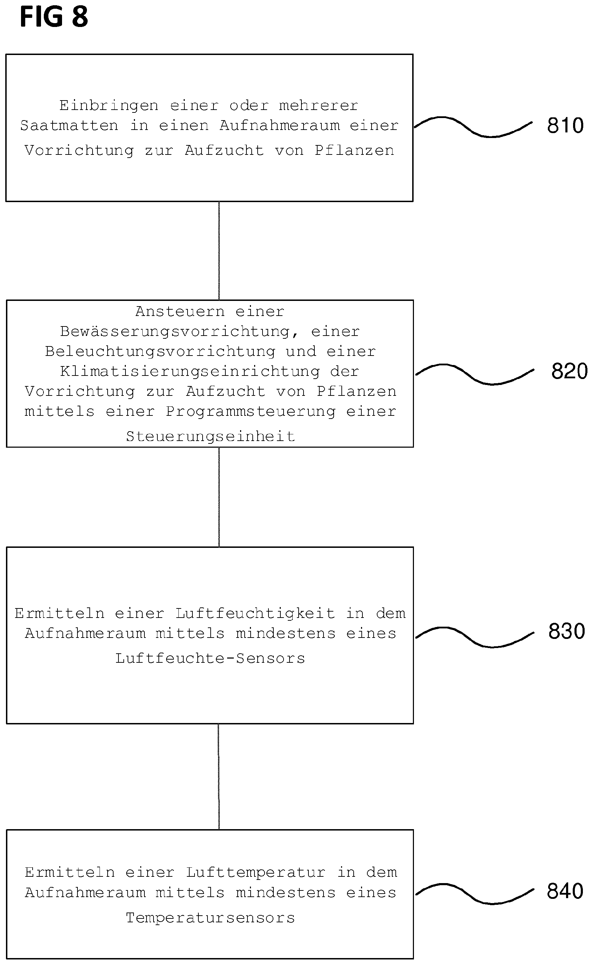

Ein Verfahren zur Aufzucht von Pflanzen und zum Klimatisieren des Aufnahmeraums 312 der Vorrichtung zur Aufzucht von Pflanzen wird unter Bezugnahme auf Fig.8 beschrieben werden.

Fig.4 zeigt eine Querschnittansicht der Vorrichtung zur Aufzucht von Pflanzen gemäß verschiedenen Ausführungsbeispielen aus einer seitlichen Perspektive.

Wie in Fig.4 dargestellt, weist die Vorrichtung zur Aufzucht von Pflanzen 400 ein Gehäuse 410 auf, das hier in Querschnittansicht aus einer seitlichen Perspektive schräg von hinten dargestellt ist. Die Vorrichtung 400 weist außerdem eine Klimatisierungseinrichtung 440 auf, wobei die Klimatisierungseinrichtung 440 ein Kühlaggregat 441 aufweisen kann, das an einer Rückseitenwand 406 des Gehäuses 410 angeordnet sein kann.

Das Kühlaggregat 441 kann in verschiedenen Ausführungsbeispielen einen Kompressor 446, einen Kondensator 442 und einen Verdampfer 444 aufweisen. Wie oben unter Bezugnahme auf Fig.3 bereits beschrieben, kann die Steuerungseinheit 60 (nicht dargestellt, siehe Fig.1) dazu eingerichtet sein, das Kühlaggregat 441 derart anzusteuern, dass das Innenraumklima in einem Aufnahmeraum 412 der Vorrichtung 400 geregelt wird. Anders ausgedrückt kann die Steuerungseinheit 60 dazu eingerichtet sein, den Kompressor 446, den Kondensator 442 und den Verdampfer 444 derart anzusteuern, dass die Lufttemperatur und die Luftfeuchte in dem Aufnahmeraum 412 geregelt werden.

In den Aufnahmeraum 412 können, wie in Fig.4 dargestellt, eine oder mehrere Aufzuchteinheiten 450 eingebracht werden. Jede der Aufzuchteinheiten 450 kann dabei jeweils eine Bewässerungswanne 422, einen oder mehrere Mattenträger 454 und eine Beleuchtungsvorrichtung 430 aufweisen. Beispielsweise kann eine in dem Aufnahmeraum 412 unten angeordnete erste Aufzuchteinheit 450a, die eine erste (beispielsweise eine untere) Bewässerungswanne 422a, einen oder mehrere Mattenträger 454a und ein erstes (beispielsweise ein unteres) LED-Modul 432a einer Beleuchtungsvorrichtung 430 aufweist, ein unteres Stockwerk 405a bilden. Ebenso kann beispielsweise eine in dem Aufnahmeraum 412 oben angeordnete zweite Aufzuchteinheit 450b, die eine zweite (beispielsweise eine obere) Bewässerungswanne 422b, einen oder mehrere Mattenträger 454b und ein zweites (beispielsweise ein oberes) LED-Modul 432b der Beleuchtungsvorrichtung 430 aufweist, ein oberes Stockwerk 405b bilden.

Eine Bewässerungsvorrichtung 50 (nicht dargestellt, siehe Fig.1) der Vorrichtung 400 kann einen in einem Sockel 414 des Gehäuses 410 angeordneten Wassertank 413 aufweisen. Die Bewässerungsvorrichtung 50 kann dabei dazu eingerichtet sein, Wasser aus dem Wassertank 413 mittels eines Wasserkreislaufsystems (nicht dargestellt) den Bewässerungswannen 422a, 422b zuzuführen. Des Weiteren kann die Bewässerungsvorrichtung 50 dazu eingerichtet sein, dem Wasser in dem Wasserkreislauf für das Pflanzenwachstum wichtige Nährstoffe zuzusetzen (nicht dargestellt).

Die Beleuchtungsvorrichtung 430 kann, wie in Fig. 4 dargestellt, für jede der in den Aufnahmeraum 412 eingebrachten Aufzuchteinheiten 450a, 450b jeweils ein LED-Modul 432, beispielsweise das erste LED-Modul 432a und das zweite LED-Modul 432b, aufweisen. Dabei kann jedes der LED-Module 432a, 432b in verschiedenen Ausführungsbeispielen dazu eingerichtet sein, Licht unterschiedlichster spektraler Zusammensetzungen abzustrahlen. Beispielsweise können die LED-Module 432a, 432b eine Mehrzahl von LEDs aufweisen, beispielsweise drei oder vier LEDs, wobei jede der LEDs jeweils einen Farbkanal aufweist. Anders ausgedrückt können die LED-Module 432a, 432b LEDs mit drei oder vier unterschiedlichen Farbkanälen aufweisen. Die LED-Module 432a, 432b können jedoch auch eine andere Anzahl von LEDs aufweisen, beispielsweise weniger als drei LEDs oder mehr als vier LEDs. Dabei kann jedes LED-Modul 432a, 432b dazu eingerichtet sein, zwischen 0% und 100% gedimmt, anders ausgedrückt geregelt bzw. verändert, zu werden. Alternativ kann jede der LEDs dazu eingerichtet sein, einzeln zwischen 0% und 100% gedimmt, anders ausgedrückt geregelt bzw. verändert, zu werden, beispielsweise mittels Pulsweitenmodulation (PWM; englisch pulse width modulation) oder mittels der angelegten Spannung.

Jedes LED-Modul 432a, 432b kann beispielsweise mindestens eine LED aufweisen, die Licht im blauen Bereich des Spektrums abstrahlt, beispielsweise in einem Bereich von ungefähr 430 nm bis ungefähr 490 nm, beispielsweise in einem Bereich von ungefähr 440 nm bis ungefähr 475 nm, beispielsweise in einem Bereich von ungefähr 450 nm bis 460 nm. Ferner kann jedes LED-Modul 432a, 432b beispielsweise mindestens eine LED aufweisen, die Licht im roten Bereich des Spektrums abstrahlt, beispielsweise in einem Bereich von ungefähr 640 nm bis ungefähr 700 nm, beispielsweise in einem Bereich von ungefähr 650 nm bis ungefähr 680 nm, beispielsweise in einem Bereich von ungefähr 660 nm bis 670 nm. Des Weiteren kann jedes LED-Modul 432a, 432b beispielsweise mindestens eine LED aufweisen, die Licht im dunkelroten Bereich des Spektrums abstrahlt, beispielsweise in einem Bereich von ungefähr 700 nm bis ungefähr 780 nm, beispielsweise in einem Bereich von ungefähr 720 nm bis ungefähr 760 nm, beispielsweise in einem Bereich von ungefähr 730 nm bis 740 nm. Außerdem kann jedes LED-Modul 432a, 432b beispielsweise mindestens eine LED aufweisen, die Licht in einer Zusammensetzung des Spektrums abstrahlt, so dass weißes Licht abgestrahlt wird.

Dabei kann jedes der LED-Module 432a, 432b eine unterschiedliche Anzahl von LEDs der jeweiligen Wellenlänge aufweisen. Beispielsweise kann jedes LED-Modul 432a, 432b zum Beleuchten des Aufnahmeraums der Vorrichtung bzw. zum Beleuchten der in den Aufnahmeraum eingebrachten Pflanzen eine LED, die Licht mit einer Wellenlänge von 450 nm abstrahlt, eine LED, die Licht mit einer Wellenlänge von 660 nm abstrahlt, eine LED, die Licht mit einer Wellenlänge von 730 nm abstrahlt, und eine LED, die weißes Licht, beispielsweise in einer Zusammensetzung, dass weißes Licht mit einem Peak im grünen Bereich abgestrahlt wird, abstrahlt, aufweisen. Alternativ kann jedes der LED-Module 432a, 432b beispielsweise eine LED, die Licht mit einer Wellenlänge von 450 nm abstrahlt, zwei LEDs, die Licht mit einer Wellenlänge von 660 nm abstrahlen, eine LED, die Licht mit einer Wellenlänge von 730 nm abstrahlt, und eine LED, die weißes Licht, beispielsweise in einer Zusammensetzung, dass weißes Licht mit einem Peak im grünen Bereich abgestrahlt wird, abstrahlt, zum Beleuchten des Aufnahmeraums der Vorrichtung bzw. zum Beleuchten der in den Aufnahmeraum eingebrachten Pflanzen aufweisen. Dabei können die LED-Module 432a, 432b jedoch auch eine andere jeweilige Anzahl von LEDs der unterschiedlichen Wellenlängen aufweisen. Außerdem können andere LED-Module 432 mit LEDs, die Licht anderer Wellenlängen abstrahlen, vorgesehen sein, wenn dies für das Keimen des in den Aufnahmeraum eingebrachten Saatguts oder das Wachstum der daraus wachsenden Pflanzen förderlich ist.

Die Steuerungseinheit kann in verschiedenen Ausführungsbeispielen dazu eingerichtet sein, jedes der LED-Module 432a, 432b derart anzusteuern, dass eine Beleuchtungsdauer, eine Beleuchtungs-Intensität und eine Zusammensetzung des Beleuchtungsspektrums, anders ausgedrückt eine Zusammensetzung der abgestrahlten Wellenlängenbereiche, geregelt, anders ausgedrückt gesteuert bzw. angepasst bzw. verändert, wird.

Zur Aufzucht von Pflanzen kann die Vorrichtung 400 in verschiedenen Ausführungsbeispielen dazu eingerichtet sein, dass Saatmatten (nicht dargestellt), die Saatgut (nicht dargestellt) aufweisen, in den Aufnahmeraum 412 eingebracht werden. Alternativ können die Saatmatten bereits ausgekeimte Pflanzen (nicht dargestellt) aufweisen, und die Vorrichtung 400 kann dazu eingerichtet sein, die Saatmatten mit den ausgekeimten Pflanzen in den Aufnahmeraum aufzunehmen. Dazu können die Mattenträger 454a, 454b dazu eingerichtet sein, dass die Saatmatten auf die Mattenträger 454a, 454b aufgelegt werden. Die Vorrichtung 400 kann dazu eingerichtet sein, dem Saatgut bzw. den daraus wachsenden Pflanzen mittels der unter den Mattenträgern 454a, 454b angeordneten Bewässerungswannen 422a, 422b der Bewässerungsvorrichtung (nicht dargestellt) Wasser und Nährstoffe zuzuführen. Des Weiteren kann die Vorrichtung 400 dazu eingerichtet sein, das Saatgut bzw. die daraus wachsenden Pflanzen mittels der LED-Module 432a, 432b der Beleuchtungsvorrichtung 430 zu bestrahlen. Beispielsweise können die LED-Module 432a, 432b dazu eingerichtet sein, Licht einer spektralen Zusammensetzung, das für das Wachstum der jeweiligen in der entsprechenden Aufzuchteinheit 450a, 450b angeordneten Pflanzen förderlich ist, abzustrahlen.

Die Klimatisierungseinrichtung 440 kann ferner in verschiedenen Ausführungsbeispielen für jedes der LED-Module 432a, 432b ein LED-Kühlgebläse 434 aufweisen. Beispielsweise kann jedes der LED-Kühlgebläse 434 dazu eingerichtet sein, von dem jeweiligen LED-Modul 432 abgestrahlte Wärme abzuführen. Die Klimatisierungseinrichtung 440 kann beispielsweise für die erste Aufzuchteinheit 450a in dem unteren Stockwerk 405a ein erstes LED-Kühlgebläse (nicht dargestellt) aufweisen, das dazu eingerichtet ist, das erste LED-Modul 432a zu kühlen. Außerdem kann die Klimatisierungseinrichtung 440 beispielsweise für die zweite Aufzuchteinheit 450b in dem oberen Stockwerk 405b ein zweites LED-Kühlgebläse 434b aufweisen, das dazu eingerichtet ist, das zweite LED-Modul 432b zu kühlen.

Wie oben unter Bezugnahme auf Fig.3 bereits ausführlich beschrieben, ist die Vorrichtung 400 in verschiedenen Ausführungsbeispielen dazu eingerichtet, mittels der Programmsteuerung der Steuerungseinheit 60 (nicht dargestellt, siehe Fig.1) die Bewässerungsvorrichtung 20 (nicht dargestellt, siehe Fig.1), die Beleuchtungsvorrichtung 430 und die Klimatisierungseinrichtung 440 der Vorrichtung 400 zu steuern. Beispielsweise kann die Steuerungseinheit 60 dazu eingerichtet sein, auf Basis der mittels entsprechender Sensoren (nicht dargestellt) für die Luftfeuchtigkeit und für die Lufttemperatur ermittelten Sensorwerte mittels der Klimatisierungseinrichtung 440 ein in dem Aufnahmeraum 412 herrschendes Innenraumklima zu regeln. Insbesondere kann die Steuerungseinheit 60 dazu eingerichtet sein, auf Basis der für die Luftfeuchtigkeit und für die Lufttemperatur des jeweiligen Stockwerks 405a, 405b ermittelten Sensorwerte mittels der Klimatisierungseinrichtung 440 ein in dem jeweiligen Stockwerk 405a, 405b herrschendes Kleinraumklima zu regeln.

Die Steuerungseinheit 60 der Vorrichtung zur Aufzucht von Pflanzen 400 ist ebenso eingerichtet, wie die unter Bezugnahme auf Fig.3 ausführlich beschriebene Steuerungseinheit 60 der Vorrichtung 300. Deshalb wird eine genauere Beschreibung der Steuerungseinheit 60 der Vorrichtung 400 hier weggelassen. Auch bezüglich einer genaueren Beschreibung des mittels der Steuerungseinheit 60 der Vorrichtung 400 durchgeführten Verfahrens zum Regeln des Innenraumklimas in dem Aufnahmeraum 412 bzw. des Kleinraumklimas in jedem der Stockwerke 405a, 405b wird auf die Erläuterungen zu Fig.3 und auf die Erläuterungen zu Fig.8 verwiesen.

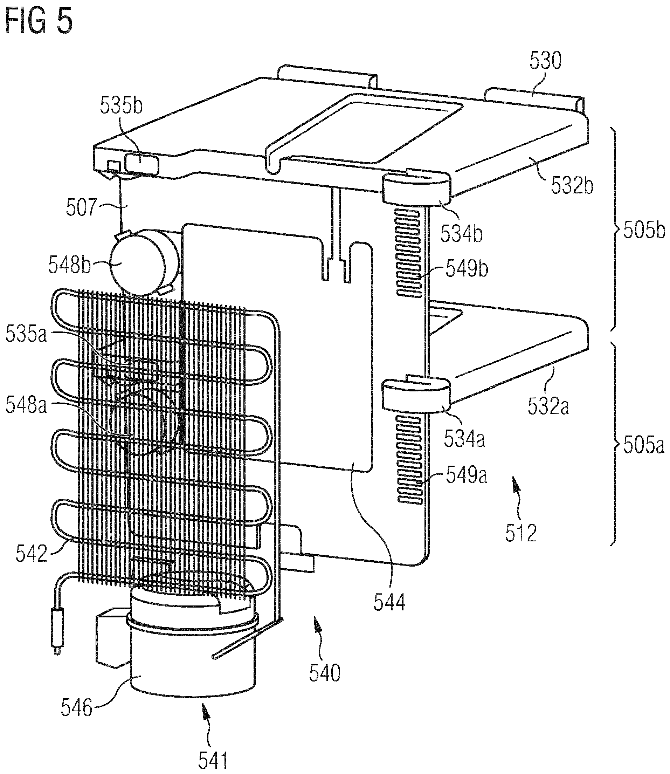

Fig.5 zeigt eine Darstellung der Klimatisierungseinrichtung gemäß verschiedenen Ausführungsbeispielen. Es ist zu beachten, dass in der Darstellung der Klimatisierungseinrichtung 540 der Fig.5 ein Gehäuse (siehe Gehäuse 410 der in Fig.4 dargestellten Vorrichtung 400) der Vorrichtung zur Aufzucht von Pflanzen der Einfachheit halber weggelassen wurde.

Wie in Fig.5 dargestellt, kann die Klimatisierungseinrichtung 540 in verschiedenen Ausführungsbeispielen ein Kühlaggregat 541 aufweisen, wobei das Kühlaggregat 541 einen Kondensator 542, einen Verdampfer 544 und einen Kompressor 546 aufweisen kann. Dabei können der Kondensator 542, der Verdampfer 544 und der Kompressor 546 beispielsweise mittels einer Rückseitenplatte 507 von einem Aufnahmeraum 512 getrennt an einer Rückseite der Vorrichtung zur Aufzucht von Pflanzen angeordnet sein.

Die Klimatisierungseinrichtung 540 kann in verschiedenen Ausführungsbeispielen dazu eingerichtet sein, mittels des Kühlaggregats 541 die Lufttemperatur in dem Aufnahmeraum (nicht dargestellt) der Vorrichtung abzusenken. Des Weiteren kann die Klimatisierungseinrichtung 540 in verschiedenen Ausführungsbeispielen dazu eingerichtet sein, mittels des Verdampfers 544 die Luftfeuchtigkeit in dem Aufnahmeraum zu regeln.

Des Weiteren kann die Klimatisierungseinrichtung 540 in verschiedenen Ausführungsbeispielen ein oder mehrere Kühlgebläse 548 aufweisen. Beispielsweise kann die Klimatisierungseinrichtung 540 für jedes Stockwerk 505a, 505b der Vorrichtung zur Aufzucht von Pflanzen ein Kühlgebläse 548 aufweisen. Beispielsweise kann die Klimatisierungsvorrichtung 540 ein erstes Kühlgebläse 548a aufweisen, das dazu eingerichtet ist, die Luft in dem unteren Stockwerk 505a umzupumpen. Des Weiteren kann die Klimatisierungseinrichtung 540 ein zweites Kühlgebläse 548b aufweisen, das dazu eingerichtet ist, die Luft in dem oberen Stockwerk 505b umzupumpen.

Wie aus Fig.5 ersichtlich, können die Kühlgebläse 548a, 548b an einer Rückseite der Vorrichtung auf der Rückseitenplatte 507 derart angeordnet sein, dass sie Luft aus dem Aufnahmeraum 512 absaugen. Dabei können die Kühlgebläse 548a, 548b beispielsweise seitlich von dem Verdampfer 544 angeordnet sein. An der anderen Seite des Verdampfers 544 können in verschiedenen Ausführungsbeispielen Luft-Eintrittsöffnungen 549 angeordnet sein. Beispielsweise kann die Rückseitenplatte 507 der Vorrichtung die Luft-Eintrittsöffnungen 549 aufweisen, wobei die Rückseitenplatte 507 erste Luft-Eintrittsöffnungen 549a und zweite Luft-Eintrittsöffnungen 549b aufweisen kann. Dabei kann beispielsweise das erste Kühlgebläse 548a dazu eingerichtet sein, Luft aus dem Aufnahmeraum 512 im Bereich des unteren Stockwerks 505a abzusaugen und an dem Verdampfer 544 vorbeizuleiten. Das zweite Kühlgebläse 548b kann dazu eingerichtet sein, Luft aus dem Aufnahmeraum 512 im Bereich des oberen Stockwerks 505b abzusaugen und an dem Verdampfer 544 vorbeizuleiten.

Die Luft-Eintrittsöffnungen 549a, 549b können dazu eingerichtet sein, die an dem Verdampfer 544 vorbeigeleitete Luft dann wieder zurück in den Aufnahmeraum 512 strömen zu lassen. Beispielsweise können die ersten Luft-Eintrittsöffnungen 549a dazu eingerichtet sein, die an dem Verdampfer 544 vorbeigeleitete Luft in den Bereich des unteren Stockwerks 505a des Aufnahmeraums 512 zurückströmen zu lassen. Die zweiten Luft-Eintrittsöffnungen 549b können dazu eingerichtet sein, die an dem Verdampfer 544 vorbeigeleitete Luft in den Bereich des oberen Stockwerks 505b des Aufnahmeraums 512 zurückströmen zu lassen.

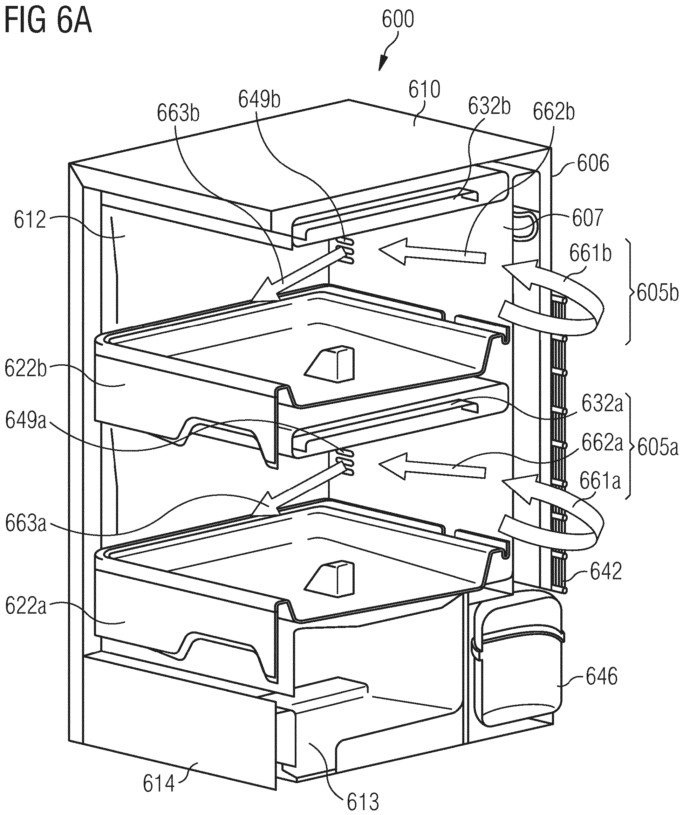

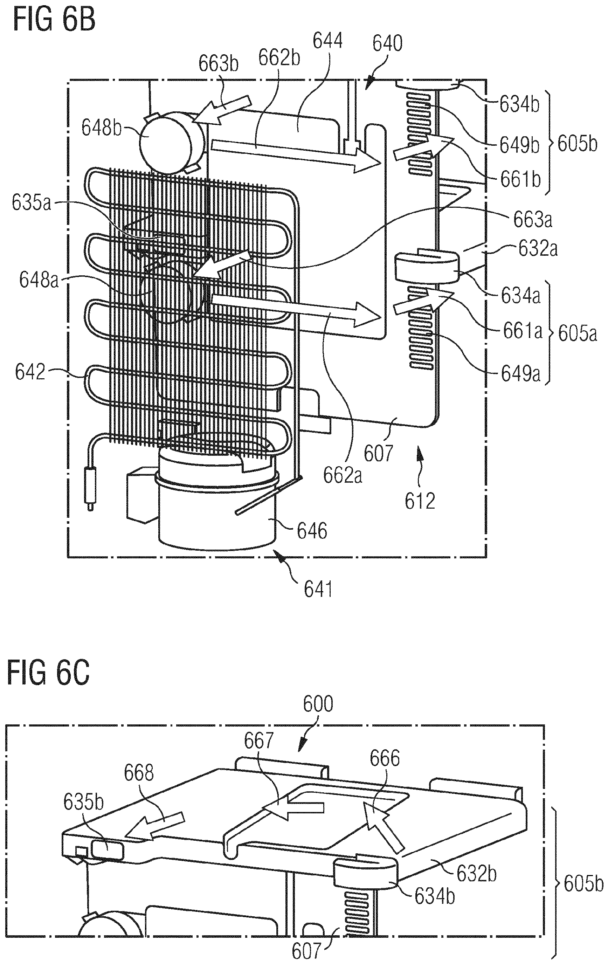

Fig.6A zeigt eine Darstellung zum Erläutern der Luftbewegung zum Klimatisieren eines Aufnahmeraums der Vorrichtung zur Aufzucht von Pflanzen gemäß verschiedenen Ausführungsbeispielen. Fig.6B zeigt eine weitere Darstellung zum Erläutern der Luftbewegung zum Klimatisieren eines Aufnahmeraums der Vorrichtung zur Aufzucht von Pflanzen gemäß verschiedenen Ausführungsbeispielen. Fig.6C zeigt eine weitere Darstellung zum Erläutern der Luftbewegung zum Klimatisieren eines Aufnahmeraums der Vorrichtung zur Aufzucht von Pflanzen gemäß verschiedenen Ausführungsbeispielen. Dabei zeigt die Darstellung der Fig.6A die Luftbewegungen zum Klimatisieren des Aufnahmeraums die Vorrichtung in einer halbfrontalen Ansicht, während die Darstellung der Fig.6B die Luftbewegungen zum Klimatisieren des Aufnahmeraums die Vorrichtung in einer rückseitigen Ausschnittansicht zeigt und die Darstellung der Fig.6C eine Detaildarstellung bestimmter Luftbewegungen zeigt.

Zur einfacheren Erläuterung der bei der Klimatisierung des Aufnahmeraums erfolgenden Luftbewegungen werden in allen drei Darstellungen dieselben Bezugszeichen verwendet werden. Es ist zu beachten, dass nicht alle Elemente in allen Darstellungen der Fig.6A, der Fig.6B und der Fig.6C sichtbar oder dargestellt sind. Beispielsweise ist nur in Fig.6A dargestellt, dass die Vorrichtung zur Aufzucht von Pflanzen 600 ein Gehäuse 610 mit einem Sockel 614, der eingerichtet ist, einen Wassertank 613 aufzunehmen, und einen Aufnahmeraum 612, der eingerichtet ist, Bewässerungswannen 622a, 662b aufzunehmen, aufweist, wobei der Einfachheit der Darstellung halber das Gehäuse 610 im Querschnitt dargestellt ist, wobei eine Vorderfront des Gehäuses 610 und eine Seitenwand des Gehäuses 610 weggelassen wurden. Andererseits ist nur in der Ausschnittansicht der Fig.6B dargestellt, dass eine Klimatisierungseinrichtung 40 (nicht dargestellt, siehe Fig.1) ein Kühlaggregat 641 aufweist, wobei das Kühlaggregat 641 einen Kondensator 642, einen Verdampfer 644 und einen Kompressor 646 aufweist. Wiederum andererseits ist in der Detailansicht der Fig.6C lediglich ein Teil des Bereichs des oberen Stockwerks 605b der Vorrichtung 600 dargestellt.

Die Klimatisierungseinrichtung kann ein oder mehrere Kühlgebläse (in Fig.6A nicht dargestellt; siehe Kühlgebläse 548a, 548b in Fig.5) aufweisen, wobei die Kühlgebläse, wie unter Bezugnahme auf die Kühlgebläse 548 der Fig.5 ausgeführt, dazu eingerichtet sein können, die Luft aus dem Aufnahmeraum 612 der Vorrichtung 600 abzusaugen (siehe Pfeile 661a, 661b), wie in Fig.6A dargestellt. Das eine oder die mehreren Kühlgebläse können in verschiedenen Ausführungsbeispielen derart an einer Rückseitenplatte 607 bereitgestellt sein, dass das eine oder die mehreren Kühlgebläse zwischen der Rückseitenplatte 607 und einer Rückseitenwand 606 der Vorrichtung 600 angeordnet sind.

Beispielsweise kann die Klimatisierungseinrichtung ein erstes Kühlgebläse und ein zweites Kühlgebläse aufweisen. Dabei kann das erste Kühlgebläse beispielsweise derart angeordnet sein, dass es die Luft aus einem Aufnahmeraum 612 im Bereich eines unteren Stockwerks 605a absaugt (Pfeil 661a). Ebenso kann das zweite Kühlgebläse beispielsweise derart angeordnet sein, dass es die Luft aus einem Aufnahmeraum 612 im Bereich eines oberen Stockwerks 605b absaugt (Pfeil 661b). Anders ausgedrückt kann das erste Kühlgebläse beispielsweise dazu eingerichtet sein, die Luft aus dem Aufnahmeraum 612 im Bereich des unteren Stockwerks 605a abzusaugen (Pfeil 661a), während das zweite Kühlgebläse beispielsweise dazu eingerichtet sein kann, die Luft aus dem Aufnahmeraum 612 im Bereich des oberen Stockwerks 605b abzusaugen (Pfeil 661b).

Die Klimatisierungseinrichtung kann ferner, wie unter Bezugnahme auf Fig.5 erläutert, ein Kühlaggregat 641 (siehe Fig.6B) aufweisen, das wiederum einen Kondensator 642, einen Verdampfer 644 und einen Kompressor 646 (in der Ansicht der Fig.6A nur zum Teil dargestellt) aufweisen kann. Dabei können der Kondensator 642, der Verdampfer 644 und der Kompressor 646 beispielsweise derart an einer Rückseitenwand 606 des Gehäuses 610 angeordnet sein, dass der Verdampfer 644 zwischen der Rückseitenwand 606 und der Rückseitenplatte 607 angeordnet ist, während der Kondensator 642 an einer außenliegenden Fläche der Rückseitenwand 606 angeordnet ist und der Kompressor 646 im Bereich des Sockels 614 angeordnet ist.

Durch die spezifische Anordnung des Verdampfers 644 zwischen der Rückseitenplatte 607 und der Rückseitenwand 606 des Gehäuses 610 kann die Klimatisierungseinrichtung beispielsweise dazu eingerichtet sein, die von den Kühlgebläsen aus dem Aufnahmeraum 612 abgesaugte Luft zwischen der Rückseitenplatte 607 und der Rückseitenwand 606 hindurch zu leiten (Pfeile 662a, 662b). Dabei kann die Vorrichtung 600 ferner dazu eingerichtet sein, die aus dem Aufnahmeraum 612 mittels der Kühlgebläse abgesaugte Luft an dem Verdampfer 644 vorbeizuleiten (Pfeile 662a, 662b).

Genauer gesagt kann die Klimatisierungseinrichtung dazu eingerichtet sein, die mittels des ersten Kühlgebläses aus dem Bereich des unteren Stockwerks 605a abgesaugte Luft (Pfeil 661a) und die mittels des zweiten Kühlgebläses aus dem Bereich des oberen Stockwerks 605b abgesaugte Luft (Pfeil 661b) durch den Raum zwischen der Rückseitenwand 606 und der Rückseitenplatte 607 hindurch und dabei an dem Verdampfer 644 vorbei zu leiten (Pfeile 662a, 662b).

Die Rückseitenplatte 607 kann, wie bereits unter Bezugnahme auf Fig.5 beschrieben, in verschiedenen Ausführungsbeispielen auf einer Seite, die einer Seite, an der die Kühlgebläse 548a, 548b angeordnet sind, gegenüberliegt, eine oder mehrere Lufteintrittsöffnungen 649 aufweisen. Beispielsweise kann die Rückseitenplatte 607 erste Lufteintrittsöffnungen 649a und zweite Lufteintrittsöffnungen 649b aufweisen. Dabei können die ersten Lufteintrittsöffnungen 649a beispielsweise derart angeordnet sein, dass sie den Raum zwischen der Rückseitenwand 606 und der Rückseitenplatte 607 mit dem Bereich des unteren Stockwerks 605a des Aufnahmeraums 612 verbinden. Die zweiten Lufteintrittsöffnungen 649b können beispielsweise derart angeordnet sein, dass sie den Raum zwischen der Rückseitenwand 606 und der Rückseitenplatte 607 mit dem Bereich des oberen Stockwerks 605b des Aufnahmeraums 612 verbinden.

Dadurch kann die Vorrichtung 600 dazu eingerichtet sein, die an dem Verdampfer 644 vorbeiströmende Luft (Pfeile 662a, 662b) mittels der Lufteintrittsöffnungen 649a, 649b in den Aufnahmeraum 612 zurück zu leiten (Pfeile 663a, 663b). Beispielsweise können die ersten Lufteintrittsöffnungen 649a dazu eingerichtet sein, die an dem Verdampfer 644 vorbeiströmende Luft in den Bereich des unteren Stockwerks 605a zurückzuleiten (Pfeil 663a), und die zweiten Lufteintrittsöffnungen 649b können dazu eingerichtet sein, die an dem Verdampfer 644 vorbeiströmende Luft in den Bereich des oberen Stockwerks 605b zurückzuleiten (Pfeil 663b).

Die Steuerungseinheit 60 (nicht dargestellt, siehe Fig.1) der Vorrichtung 600 kann in verschiedenen Ausführungsbeispielen dazu eingerichtet sein, die Klimatisierungseinrichtung 40 (nicht dargestellt, siehe Fig.1) derart anzusteuern, dass die an dem Verdampfer 644 vorbeiströmende Luft (Pfeile 662a, 662b) während des Vorbeiströmens gekühlt wird. Beispielsweise kann die Steuerungseinheit dazu eingerichtet sein, die Klimatisierungseinheit derart anzusteuern, dass die Kühlgebläse so viel Luft an dem Verdampfer 644 vorbeiströmen lassen (Pfeile 662a, 662b), dass die Temperatur der Luft in dem Aufnahmeraum 612 abgesenkt wird. Anders ausgedrückt kann die Steuerungseinheit die Klimatisierungseinrichtung derart ansteuern, dass die Temperatur der mittels der Lufteintrittsöffnungen 649a, 649b in den Aufnahmeraum 612 zurückgeleiteten Luft (Pfeile 663a, 663b) geregelt wird. Beispielsweise kann die Steuerungseinheit die Klimatisierungseinrichtung derart ansteuern, dass die Temperatur der mittels der Lufteintrittsöffnungen 649a, 649b in den Aufnahmeraum 612 zurückgeleiteten Luft (Pfeile 663a, 663b) auf eine das Wachstum der in den Aufnahmeraum eingebrachten Pflanzen fördernde Temperatur eingestellt wird.

Die Steuerungseinheit 60 der Vorrichtung 600 kann des Weiteren in verschiedenen Ausführungsbeispielen dazu eingerichtet sein, die Klimatisierungseinrichtung derart anzusteuern, dass ein Gehalt an Luftfeuchtigkeit der an dem Verdampfer 644 vorbeiströmenden Luft (Pfeile 662a, 662b) während des Vorbeiströmens abgesenkt wird. Beispielsweise kann die Steuerungseinheit dazu eingerichtet sein, die Klimatisierungseinheit derart anzusteuern, dass die Kühlgebläse so viel Luft an dem Verdampfer 644 vorbeiströmen lassen (Pfeile 662a, 662b), dass der Feuchtigkeitsgehalt der Luft in dem Aufnahmeraum 612 abgesenkt wird. Anders ausgedrückt kann die Steuerungseinheit die Klimatisierungseinrichtung derart ansteuern, dass die Luftfeuchte der mittels der Lufteintrittsöffnungen 649a, 649b in den Aufnahmeraum 612 zurückgeleiteten Luft (Pfeile 663a, 663b) geregelt wird. Beispielsweise kann die Steuerungseinheit die Klimatisierungseinrichtung derart ansteuern, dass die Luftfeuchte der mittels der Lufteintrittsöffnungen 649a, 649b in den Aufnahmeraum 612 zurückgeleiteten Luft (Pfeile 663a, 663b) auf einen das Wachstum der in den Aufnahmeraum eingebrachten Pflanzen fördernden Luftfeuchtegehalt eingestellt wird.

Wie erläutert, kann die Klimatisierungseinrichtung, angesteuert von der Steuerungseinheit, in verschiedenen Ausführungsbeispielen dazu eingerichtet sein, mittels des Verdampfers 644 den Gehalt an Luftfeuchtigkeit der in dem Aufnahmeraum 612 befindlichen Luft abzusenken. Dazu kann die Klimatisierungseinrichtung dazu eingerichtet sein, so viel Luft aus dem Aufnahmeraum 612 an dem Verdampfer 644 vorbeizuleiten (Pfeile 662a, 662b) und den Verdampfer 644 währenddessen so weit zu kühlen, dass ein Teil des in der Luft befindlichen Wassers an dem Verdampfer 644 kondensiert. Dadurch kann der Gehalt an Luftfeuchtigkeit in dem Aufnahmeraum 612 abgesenkt werden.

Andererseits kann die Bewässerungseinheit 20 (nicht dargestellt, siehe Fig.1), angesteuert von der Steuerungseinheit, in verschiedenen Ausführungsbeispielen dazu eingerichtet sein, mittels eines Wasserkreislaufsystems, wie unter Bezugnahme auf Fig.2 beschrieben, den Bewässerungswannen 622a, 622b Wasser zuzuführen. Dabei kann die Bewässerungseinheit, angesteuert von der Steuerungseinheit, dazu eingerichtet sein, die Bewässerungswannen 622a, 622b beispielsweise in regelmäßigen Intervallen zu befüllen, wobei Wasser verdunsten kann. Dadurch kann der Gehalt an Luftfeuchtigkeit in dem Aufnahmeraum 612 erhöht werden.

Die Vorrichtung zur Aufzucht von Pflanzen 600 kann ferner dazu eingerichtet sein, Wasser, das beim Vorbeiströmen der Luft (Pfeile 662) an dem Verdampfer 644 kondensiert, ablaufen zu lassen und in dem Wassertank der Bewässerungsvorrichtung (siehe beispielsweise Wassertank 613 in Fig.6A) zu sammeln, derart dass dieses Kondenswasser dem Wasserkreislaufsystem der Bewässerungsvorrichtung zugeführt wird (nicht dargestellt).

Die Vorrichtung zur Aufzucht von Pflanzen 600 kann in verschiedenen Ausführungsbeispielen des Weiteren eine Vorrichtung zum Reinigen der Luft (nicht dargestellt) in dem Aufnahmeraum aufweisen. Anders ausgedrückt kann die Vorrichtung 600 dazu eingerichtet sein, die Luft in dem Aufnahmeraum 612 zu reinigen. Beispielsweise kann die Vorrichtung zur Aufzucht von Pflanzen 600 dazu eingerichtet sein, die Luft in dem Aufnahmeraum mittels Bestrahlens mit Licht im UV-C-Bereich zu reinigen. Dazu kann die Vorrichtung 600 beispielsweise dazu eingerichtet sein, die aus dem Aufnahmeraum 612 abgepumpte Luft (Pfeile 661a, 661b) durch eine geeignete Röhre (nicht dargestellt), beispielsweise eine UV-durchlässige Röhre aus Quarzglas (nicht dargestellt), hindurchzuleiten und dabei mit Licht im UV-C-Bereich derart zu bestrahlen, dass dabei in der aus dem Aufnahmeraum 612 abgepumpten Luft vorhandene Keime, beispielsweise Pilze, Pilzsporen und/oder Bakterien, abgetötet werden. Anders ausgedrückt kann die Vorrichtung 600 dazu eingerichtet sein, die aus dem Aufnahmeraum 612 abgepumpte Luft (Pfeile 661a, 661b) mittels Bestrahlens mit Licht im UV-C-Bereich zu sterilisieren, bevor sie durch die Eintrittsöffnungen 649a, 649b zurück in den Aufnahmeraum 612 geleitet wird (Pfeile 663a, 663b).

Wiederum bezugnehmend auf Fig.5, kann jedes der Stockwerke 505a, 505b, wie oben bereits unter Bezugnahme auf Fig.2 bis Fig.4 beschrieben, in verschiedenen Ausführungsbeispielen jeweils ein LED-Modul 532 der Beleuchtungsvorrichtung 530 aufweisen. Beispielsweise kann das untere Stockwerk 505a ein erstes (beispielsweise ein unteres) LED-Modul 532a aufweisen, wie in Fig.5 dargestellt. Ebenso kann das obere Stockwerk 505b ein zweites (beispielsweise ein oberes) LED-Modul 532b aufweisen. Jedes der LED-Module 532a, 532b kann, wie unter Bezugnahme auf Fig.4 für die LED-Module 432a, 432b beschrieben, eine Mehrzahl von LEDs aufweisen. Jedes der LED-Module 532a, 532b kann außerdem die gleichen Eigenschaften aufweisen, wie unter Bezugnahme auf Fig.4 für die LED-Module 432a, 432b ausführlich beschrieben.

Die Klimatisierungseinrichtung 540 kann ferner dazu eingerichtet sein, die von den LED-Modulen 532a, 532b abgestrahlte Wärme abzuführen. Dazu kann die Klimatisierungseinrichtung 540 ein oder mehrere LED-Kühlgebläse 534 und eine oder mehrere LED-Luftaustrittsöffnungen 535 aufweisen. Beispielsweise kann die Klimatisierungseinrichtung 540 ein erstes LED-Kühlgebläse 534a und eine erste LED-Luftaustrittsöffnung 535a aufweisen. Dabei können das erste LED-Kühlgebläse 534a und die erste LED-Luftaustrittsöffnung 535a dazu eingerichtet sein, die von dem ersten LED-Modul 532a in dem unteren Stockwerk 505a erzeugte Wärme abzuführen. Ebenso kann die Klimatisierungseinrichtung 540 ein zweites LED-Kühlgebläse 534b und eine zweite LED-Luftaustrittsöffnung 535b aufweisen. Dabei können das zweite LED-Kühlgebläse 534b und die zweite LED-Luftaustrittsöffnung 535b dazu eingerichtet sein, die von dem zweiten LED-Modul 532b in dem oberen Stockwerk 505b erzeugte Wärme abzuführen.

Dazu können das erste LED-Kühlgebläse 534a und das zweite LED-Kühlgebläse 534b dazu eingerichtet sein, Umgebungsluft aus einer rückseitigen Umgebung der Vorrichtung zur Aufzucht von Pflanzen anzusaugen und an dem ersten LED-Modul 532a bzw. dem zweiten LED-Modul 532b vorbeizuleiten. Beispielsweise können die LED-Kühlgebläse 534a, 534b dazu eingerichtet sein, Umgebungsluft anzusaugen und an über den LED-Modulen 532a, 532b angeordneten Kühlrippen (nicht dargestellt) derart vorbeizuleiten, dass von den LED-Modulen 532a, 532b erzeugte Wärme abgeführt wird.

Wiederum bezugnehmend auf Fig.6A bis Fig.6C, kann dementsprechend jedes der Stockwerke 605a, 605b, wie oben bereits unter Bezugnahme auf Fig.2 bis Fig.5 beschrieben, in verschiedenen Ausführungsbeispielen jeweils ein LED-Modul 632 der Beleuchtungsvorrichtung aufweisen. Beispielsweise kann das untere Stockwerk 605a ein erstes (beispielsweise ein unteres) LED-Modul 632a aufweisen, wie in Fig.6A und Fig.6B dargestellt. Ebenso kann das obere Stockwerk 605b ein zweites (beispielsweise ein oberes) LED-Modul 632b aufweisen, wie in Fig.6A und Fig.6C dargestellt. Dabei zu bemerken, dass in den Ausschnitt- bzw. Detailansichten der Fig.6B und Fig.6C entweder nur das erste LED-Modul 632a des unteren Stockwerks 605a dargestellt ist (Fig.6B) oder nur das zweite LED-Modul 632b des oberen Stockwerks 605b dargestellt ist (Fig.6C).

Dabei kann jedes der LED-Module 632a, 632b kann, wie unter Bezugnahme auf Fig.4 für die LED-Module 432a, 432b beschrieben, eine Mehrzahl von LEDs aufweisen. Jedes der LED-Module 632a, 632b kann außerdem die gleichen Eigenschaften aufweisen, wie unter Bezugnahme auf Fig.4 für die LED-Module 432a, 432b ausführlich beschrieben.

Die Klimatisierungseinrichtung kann dazu eingerichtet sein, die von den LED-Modulen 632a, 632b abgestrahlte Wärme abzuführen. Dazu kann die Klimatisierungseinrichtung ein oder mehrere LED-Kühlgebläse 634 und eine oder mehrere LED-Luftaustrittsöffnungen 635 aufweisen. Beispielsweise kann die Klimatisierungseinrichtung ein erstes LED-Kühlgebläse 634a und eine erste LED-Luftaustrittsöffnung 635a aufweisen. Dabei können das erste LED-Kühlgebläse 634a und die erste LED-Luftaustrittsöffnung 635a dazu eingerichtet sein, die von dem ersten LED-Modul 632a in dem unteren Stockwerk 605a erzeugte Wärme abzuführen. Ebenso kann die Klimatisierungseinrichtung ein zweites LED-Kühlgebläse 634b und eine zweite LED-Luftaustrittsöffnung 635b aufweisen. Dabei können das zweite LED-Kühlgebläse 634b und die zweite LED-Luftaustrittsöffnung 635b dazu eingerichtet sein, die von dem zweiten LED-Modul 632b in dem oberen Stockwerk 605b erzeugte Wärme abzuführen.

Wie in Fig.6C dargestellt, kann das zweite LED-Kühlgebläse 634b dazu eingerichtet sein, dem zweiten LED-Modul 632b Luft zuzuführen (Pfeil 666), derart dass die zugeführte Luft an dem zweiten LED-Modul 632b vorbeiströmt (Pfeil 667), wobei das zweite LED-Kühlgebläse 634b dazu eingerichtet sein kann, dem zweiten LED-Modul 632b Außenluft zuzuführen (Pfeil 666). Des Weiteren können die zweiten LED-Luftaustrittsöffnungen 635b dazu eingerichtet sein, die an dem zweiten LED-Modul 632b vorbeiströmende Luft (Pfeil 667) weiterzuleiten (Pfeil 668), wobei die zweiten LED-Luftaustrittsöffnungen dazu eingerichtet sein können, die an dem zweiten LED-Modul 632b vorbeiströmende Luft (Pfeil 667) nach außen abzugeben (Pfeil 668). Dabei kann die von dem zweiten LED-Modul 632b erzeugte Wärme mittels der zugeführten, vorbeiströmenden und weitergeleiteten Luft (Pfeile 666, 667 und 668) abgeführt werden, wobei die Wärme mittels der weitergeleiteten Luft nach außen abgeführt werden kann (Pfeil 668).

Ebenso, wie hier für das zweite LED-Modul 632b beschrieben, können das erste LED-Kühlgebläse 634a (siehe Fig.6B) und die ersten LED-Luftaustrittsöffnungen 635a dazu eingerichtet sein, die von dem ersten LED-Modul 632a erzeugte Wärme im Bereich des unteren Stockwerks 605a abzuführen. Dazu können das erste LED-Kühlgebläse 634a und die ersten LED-Luftaustrittsöffnungen 635a dazu eingerichtet sein, im Bereich des ersten LED-Moduls 632a entsprechende Luftströmungen (nicht dargestellt) zu erzeugen, mittels derer die von dem LED-Modul 632a erzeugte Wärme abgeführt wird. Anders ausgedrückt kann die von dem ersten LED-Modul 632a erzeugte Wärme mittels entsprechender, mittels des ersten LED-Kühlgebläses 634a und der ersten LED-Luftaustrittsöffnungen 635a erzeugter Luftströmungen im Bereich des ersten LED-Moduls 632a bzw. des unteren Stockwerks 605a abgeführt werden.

Zum Abführen von überschüssiger Wärme können, wie bereits beschrieben, das erste LED-Kühlgebläse 634a und das zweite LED-Kühlgebläse 634b dazu eingerichtet sein, Umgebungsluft aus einer rückseitigen Umgebung der Vorrichtung zur Aufzucht von Pflanzen anzusaugen und an dem ersten LED-Modul 632a bzw. dem zweiten LED-Modul 632b vorbeizuleiten. Beispielsweise können die LED-Kühlgebläse 634a, 634b dazu eingerichtet sein, Umgebungsluft anzusaugen und an über den LED-Modulen 632a, 632b angeordneten Kühlrippen (nicht dargestellt) derart vorbeizuleiten, dass von den LED-Modulen 632a, 632b erzeugte Wärme abgeführt wird.

In verschiedenen Ausführungsbeispielen kann die Klimatisierungseinrichtung der Vorrichtung 600, wie unter Bezugnahme auf Fig.3 beschrieben, einen oder mehrere Temperatursensoren (315 der Fig.3; in Fig.6 nicht dargestellt) und/oder einen oder mehrere Luftfeuchte-Sensoren (316 der Fig.3; in Fig.6 nicht dargestellt) aufweisen. Die Temperatursensoren und die Luftfeuchte-Sensoren der Vorrichtung 600 können dabei dazu eingerichtet sein, ermittelte Messwerte, anders ausgedrückt ermittelte Sensorwerte, für die Lufttemperatur bzw. die Luftfeuchtigkeit in dem Aufnahmeraum 612 der Programmsteuerung der Steuerungseinrichtung zuzuführen. Anders ausgedrückt kann die Steuerungseinrichtung dazu eingerichtet sein, ermittelte Messwerte, anders ausgedrückt ermittelte Sensorwerte, für die Lufttemperatur bzw. die Luftfeuchtigkeit in dem Aufnahmeraum 612 von den Temperatursensoren und den Luftfeuchte-Sensoren der Vorrichtung 600 empfangen.

Dabei kann die Steuerungseinheit, wie bereits unter Bezugnahme auf Fig.3 beschrieben, in verschiedenen Ausführungsbeispielen dazu eingerichtet sein, auf Basis der für die Luftfeuchtigkeit und für die Lufttemperatur ermittelten Sensorwerte mittels der Klimatisierungseinrichtung ein in dem Aufnahmeraum 612 herrschendes Innenraumklima zu regeln. Insbesondere kann die Steuerungseinheit dazu eingerichtet sein, auf Basis der für die Luftfeuchtigkeit und für die Lufttemperatur des jeweiligen Stockwerks 605a, 605b ermittelten Sensorwerte mittels der Klimatisierungseinrichtung ein in dem jeweiligen Stockwerk 605a, 605b herrschendes Kleinraumklima zu regeln.

Beispielsweise kann die Steuerungseinheit dazu eingerichtet sein, basierend auf den Sensorwerten des im Bereich des unteren Stockwerks 605a angeordneten Temperatursensors und/oder Luftfeuchtesensors die Klimatisierungseinrichtung derart anzusteuern, dass das in dem unteren Stockwerk 605a des Aufnahmeraums 612 herrschende Kleinraumklima geregelt wird. Ebenso kann die Steuerungseinheit dazu eingerichtet sein, basierend auf den Sensorwerten des im Bereich des oberen Stockwerks 605b angeordneten Temperatursensors und/oder Luftfeuchtesensors die Klimatisierungseinrichtung derart anzusteuern, dass das in dem oberen Stockwerk 605b des Aufnahmeraums 612 herrschende Kleinraumklima geregelt wird.

Dabei kann die Steuerungseinheit dazu eingerichtet sein, die Klimatisierungseinrichtung derart anzusteuern, dass in dem Bereich des unteren Stockwerks 605a ein anderes Kleinraumklima eingestellt wird als in dem Bereich des oberen Stockwerks 605b des Aufnahmeraums 612. Beispielsweise kann die Steuerungseinheit dazu eingerichtet sein, die Klimatisierungseinrichtung derart anzusteuern, dass in dem Bereich des unteren Stockwerks 605a ein dem Wachstum der in dem unteren Stockwerk 605a wachsenden Pflanzen förderliches Kleinraumklima eingestellt wird. Andererseits kann die Steuerungseinheit dazu eingerichtet sein, die Klimatisierungseinrichtung derart anzusteuern, dass in dem Bereich des oberen Stockwerks 605b ein dem Wachstum der in dem oberen Stockwerk 605b wachsenden Pflanzen förderliches Kleinraumklima eingestellt wird, wobei das dem Wachstum der in dem oberen Stockwerk 605b wachsenden Pflanzen förderliche Kleinraumklima von dem das Wachstum der in dem unteren Stockwerk 605a wachsenden Pflanzen förderlichen Kleinraumklima verschieden sein kann.

Dementsprechend kann die Klimatisierungseinheit in verschiedenen Ausführungsbeispielen dazu eingerichtet sein, entsprechend der auf den Sensorwerten basierenden Ansteuerung von der Steuerungseinheit die an dem Verdampfer vorbeiströmenden Luftmengen (Pfeile 662) mittels der Kühlgebläse 648 (Pfeile 661) und der Lufteintrittsöffnungen (Pfeile 663) derart zu regulieren, dass die Luft in dem Aufnahmeraum 612 eine dem Wachstum der darin eingebrachten Pflanzen förderliche Temperatur und Luftfeuchte aufweist.

Beispielsweise kann die Klimatisierungseinheit dazu eingerichtet sein, entsprechend der auf den Sensorwerten des ersten Temperatursensors (nicht dargestellt; siehe beispielsweise Bezugszeichen 315a der Fig.3) und des ersten Luftfeuchte-Sensors (nicht dargestellt; siehe beispielsweise Bezugszeichen 316a der Fig.3) basierenden Ansteuerung von der Steuerungseinheit die an dem Verdampfer vorbeiströmende Luftmenge (Pfeil 662a) mittels des ersten Kühlgebläses 648a (Pfeil 661a) und der Lufteintrittsöffnungen 649a (Pfeil 663a) derart zu regulieren, dass die Luft in dem Bereich des unteren Stockwerks 605a des Aufnahmeraums 612 eine dem Wachstum der in dem unteren Stockwerk 605a wachsenden Pflanzen förderliche Temperatur und Luftfeuchte aufweist. Ebenso kann die Klimatisierungseinheit dazu eingerichtet sein, entsprechend der auf den Sensorwerten des zweiten Temperatursensors 315b und des zweiten Luftfeuchte-Sensors 316b basierenden Ansteuerung von der Steuerungseinheit die an dem Verdampfer vorbeiströmende Luftmenge (Pfeil 662b) mittels des zweiten Kühlgebläses 648b (Pfeil 661b) und der zweiten Lufteintrittsöffnungen 649b (Pfeil 663b) derart zu regulieren, dass die Luft in dem Bereich des oberen Stockwerks 605b des Aufnahmeraums 612 eine dem Wachstum der in dem oberen Stockwerk 605b wachsenden Pflanzen förderliche Temperatur und Luftfeuchte aufweist.

Des Weiteren kann die Steuerungseinrichtung in verschiedenen Ausführungsbeispielen dazu eingerichtet sein, die Lufttemperatur in dem Aufnahmeraum 612 beispielsweise mittels einer von den LED-Modulen 632 abgestrahlten Wärmemenge zu erhöhen. Beispielsweise kann die Steuerungseinrichtung dazu eingerichtet sein, die Lufttemperatur in dem Bereich des unteren Stockwerks 605a mittels der von dem ersten LED-Modul 632a abgestrahlten Wärmemenge zu erhöhen. Ebenso kann die Steuerungseinrichtung dazu eingerichtet sein, die Lufttemperatur in dem Bereich des oberen Stockwerks 605b mittels der von dem zweiten LED-Modul 632b abgestrahlten Wärmemenge zu erhöhen.

Wie oben unter Bezugnahme auf Fig.5 und Fig.6A bereits ausgeführt, kann die Klimatisierungseinrichtung, angesteuert von der Steuerungseinheit, in verschiedenen Ausführungsbeispielen dazu eingerichtet sein, mittels des Verdampfers 644 den Gehalt an Luftfeuchtigkeit der in dem Aufnahmeraum 612 befindlichen Luft abzusenken. Außerdem kann die Steuerungseinheit dazu eingerichtet sein, die Klimatisierungseinrichtung derart anzusteuern, dass die an dem Verdampfer 644 vorbeiströmende Luft während des Vorbeiströmens gekühlt wird, wodurch die Temperatur in dem Aufnahmeraum 612 abgesenkt werden kann.

Wie oben unter Bezugnahme auf Fig.3 beschrieben, kann die Steuerungseinheit in verschiedenen Ausführungsbeispielen dazu eingerichtet sein, die Bewässerungsvorrichtung, die Beleuchtungsvorrichtung und die Klimatisierungseinrichtung derart anzusteuern, dass ein auf die jeweiligen in der Aufzuchteinheit wachsenden Pflanzen und ihren Zustand abgestimmtes Innenraumklima bzw. Kleinraumklima hergestellt wird.

Zu diesem Zweck kann jede der in den Aufnahmeraum 612 der Vorrichtung 600 eingebrachten Saatmatten (nicht dargestellt) in verschiedenen Ausführungsbeispielen beispielsweise einen RFID-Tag (nicht dargestellt; beispielsweise einen RFID-Transponder) aufweisen. Die Vorrichtung 600 kann außerdem mindestens eine RFID-Antenne (nicht dargestellt) und eine RFID-Lesevorrichtung (nicht dargestellt) zum Empfangen bzw. Auslesen von RFID-Signalen der RFID-Transponder aufweisen. Zusätzlich oder alternativ zu dem RFID-Tag kann jede der Saatmatten eine QR-Kennzeichnung und/oder einen Barcode aufweisen, und die Vorrichtung kann dementsprechend zusätzlich oder alternativ zu den RFID-Antennen und der RFID-Lesevorrichtung mindestens einen QR-Code-Sensor und/oder mindestens einen Barcode-Sensor und entsprechende Lesevorrichtungen aufweisen, welche die QR-Kennzeichnung bzw. den Barcode der mindestens einen Saatmatte zur Steuerung der Programmsteuerung erfassen und auslesen können.

Die Steuerungseinheit kann dazu eingerichtet sein, sämtliche Signale der RFID-Antennen, der RFID-Lesevorrichtung, der QR-Code-Sensoren, der Barcode-Sensoren und der entsprechenden Lesevorrichtungen auszuwerten, dadurch das eingebrachte Saatgut zu identifizieren und mittels der Programmsteuerung für dieses Saatgut geeignete Klimatisierungsdaten zur Klimatisierung des Aufnahmeraums festzulegen. Anders ausgedrückt kann die Vorrichtung mindestens einen Programmsensor aufweisen, wobei der Programmsensor als RFID-Sensor und/oder QR-Code Sensor und/oder Barcode-Sensor vorgesehen ist, welcher RFID-Signale bzw. eine QR-Kennzeichnung bzw. einen Barcode von der mindestens einen Saatmatte zur Steuerung der Programmsteuerung erfassen kann. Dadurch kann die Steuerungseinheit dazu eingerichtet sein, mittels der Programmsteuerung auf Basis der Klimatisierungsdaten ein auf das Saatgut in der entsprechenden Aufzuchteinheit abgestimmtes Kleinraumklima herzustellen.

Die RFID-Antennen (und/oder der QR-Code-Sensor und/oder der Barcode-Sensor) können in den Seitenwänden der Vorrichtung 600 angeordnet sein, und die RFID-Lesevorrichtung (und oder die entsprechenden anderen Lesevorrichtungen) kann an einer Rückseite der Vorrichtung 600 angeordnet sein. Beispielsweise kann jeweils eine RFID-Antenne in einem dem unteren Stockwerk 605a entsprechenden Bereich des Aufnahmeraums 612 und in einem dem oberen Stockwerk 605b entsprechenden Bereich des Aufnahmeraums 612 angeordnet sein. Alternativ kann jeweils eine RFID-Antenne derart in jeder der Seitenwände angeordnet sein, dass jede der einen oder mehreren auf jeweils einen Mattenträger aufgebrachten Saatmatten einzeln identifiziert werden kann. Anders ausgedrückt kann die Vorrichtung 600 dazu eingerichtet sein, mittels der RFID-Antennen Saatgut bzw. Pflanzen zu identifizieren, das auf jeder der einen bis mehreren Saatmatten, die auf den jeweiligen Mattenträger im unteren Stockwerk 605a bzw. im oberen Stockwerk 605b aufgelegt sind, aufgebracht ist, wobei jede der Saatmatten dazu einen RFID-Tag aufweist.

Die Steuerungseinheit kann dazu eingerichtet sein, mittels der RFID-Lesevorrichtung die entsprechenden, mittels der Saatmatten in den Aufnahmeraum 612 eingebrachten RFID-Transponder zu lesen und zu identifizieren. Ferner kann die Steuerungseinheit dazu eingerichtet sein, Informationen zu dem auf der jeweiligen Saatmatte aufgebrachten und mittels des jeweiligen RFID-Transponders identifizierten Saatgut (bzw. zu den auf der jeweiligen Saatmatte ausgekeimten Pflanzen) aus einem Programmspeicher abzurufen. Beispielsweise kann die Steuerungseinheit dazu eingerichtet sein, Informationen bezüglich des in den Aufnahmeraum 612 eingebrachten Pflanzentyps, seiner exakten Positionierung innerhalb des Aufnahmeraums 612 und einer Wachstumsphase der Pflanzen aus dem Programmspeicher auszulesen. Außerdem kann die Steuerungseinheit in verschiedenen Ausführungsbeispielen dazu eingerichtet sein, basierend auf den ausgelesenen Informationen zu dem eingebrachten Pflanzentyp, seiner Positionierung im Aufnahmeraum 612 und der Wachstumsphase eine Anweisung bezüglich der für das weitere Wachstum der Pflanzen förderliche Innenraumklima bzw. Kleinraumklima aus dem Programmspeicher auszulesen.

Dazu kann die Programmsteuerung der Steuerungseinheit in verschiedenen Ausführungsbeispielen, wie bereits ausgeführt, Klimatisierungsdaten aufweisen. Beispielsweise können die Klimatisierungsdaten mittels der beschriebenen Identifizierung des in den Aufnahmeraum eingebrachten Saatguts individuell auf dieses Saatgut abgestimmt sein. Anders ausgedrückt kann die Programmsteuerung individuell auf in dem Aufnahmeraum aufgenommenes Saatgut abgestimmte Klimatisierungsdaten aufweisen. Dadurch kann die Steuerungseinheit insbesondere dazu eingerichtet sein, mittels der Programmsteuerung auf Basis der Klimatisierungsdaten ein auf das Saatgut in der entsprechenden Aufzuchteinheit abgestimmtes Kleinraumklima herzustellen.

Für die Programmsteuerung kann ferner ein Datenspeicher vorgesehen sein, aus welchem die individuell auf das Saatgut abgestimmten Beleuchtungsdaten und/oder Bewässerungsdaten und/oder Klimatisierungsdaten abrufbar sind. Der Datenspeicher kann dabei vorzugsweise über eine in der Vorrichtung vorgesehene Internetverbindung als externer Datenspeicher vorgesehen sein.

Anders ausgedrückt kann die Steuerungseinheit dazu eingerichtet sein, basierend auf den ausgelesenen Informationen Regelgrößen für die Lufttemperatur und die Luftfeuchtigkeit in dem Aufnahmeraum festzulegen und an die Klimatisierungseinrichtung auszugeben. Ferner kann die Steuerungseinheit dazu eingerichtet sein, basierend auf den ausgelesenen Informationen Regelgrößen für eine Beleuchtungsintensität und eine Beleuchtungsdauer für jede der Saatmatten festzulegen und an die Beleuchtungsvorrichtung auszugeben. Des Weiteren kann die Steuerungseinheit dazu eingerichtet sein, basieren auf den ausgelesenen Informationen Regelgrößen für ein Befüllen der Bewässerungswannen unter den jeweiligen Saatmatten festzulegen und an die Bewässerungsvorrichtung auszugeben.

Zusätzlich kann die Steuerungseinheit dazu eingerichtet sein, basierend auf den ausgelesenen Informationen Regelgrößen für die Lufttemperatur, die Luftfeuchtigkeit, die Beleuchtungsintensität, die Beleuchtungsdauer und das Befüllen der Bewässerungswannen mit Wasser und Nährstoffen in jedem einer Saatmatte entsprechenden Bereich des Aufnahmeraums 612 auf der Basis eines Zustands der in den Aufnahmeraum 612 eingebrachten Pflanzen festzulegen und an die Klimatisierungseinrichtung, die Beleuchtungsvorrichtung und die Bewässerungsvorrichtung auszugeben. Dazu kann die Vorrichtung zur Aufzucht von Pflanzen 612 des Weiteren eine Kamera (nicht dargestellt) zum Aufnehmen von Bildern der in dem Aufnahmeraum aufgenommenen Saatmatten und der aus dem Saatgut entstehenden (bzw. den auf den Saatmatten wachsenden) Pflanzen aufweisen.

Ferner kann die Steuerungseinheit eine Mustererkennungsvorrichtung (nicht dargestellt) und einen zugehörigen Mustererkennungsspeicher (nicht dargestellt) aufweisen und dazu eingerichtet sein, Signale von der Kamera zu empfangen und zur Programmsteuerung weiterzuleiten. Außerdem kann die Steuerungseinheit dazu eingerichtet sein, mittels der Mustererkennungsvorrichtung die mittels der Kamera aufgenommenen Bilder mit einem oder mehreren in dem Mustererkennungsspeicher gespeicherten Referenzbildern zu vergleichen zum Ermitteln eines Zustands der in dem Aufnahmeraum aufgenommenen Pflanzen, um somit die Programmsteuerung auf die jeweilige Pflanze und ihren Zustand anzupassen. Anders ausgedrückt kann die Steuerungseinheit dazu eingerichtet sein, die Klimatisierungseinrichtung, die Beleuchtungsvorrichtung und die Bewässerungsvorrichtung derart anzusteuern, dass die Lufttemperatur, die Luftfeuchtigkeit, die Beleuchtungsintensität, die Beleuchtungsdauer und das Befüllen der Bewässerungswannen auf den Zustand der aus dem Saatgut entstehenden Pflanzen abgestimmt ist.

In Summe kann die Steuerungseinheit demnach dazu eingerichtet sein, die Klimatisierungseinrichtung, die Beleuchtungsvorrichtung und die Bewässerungsvorrichtung derart anzusteuern, dass die Lufttemperatur, die Luftfeuchtigkeit, die Beleuchtungsintensität, die Beleuchtungsdauer und das Befüllen der Bewässerungswannen auf das jeweilige Saatgut und/oder den Zustand der aus dem Saatgut entstehenden Pflanzen angepasst ist.

In verschiedenen Ausführungsbeispielen kann die Vorrichtung 600 ferner dazu eingerichtet sein, sich mittels WLAN mit dem Internet zu verbinden. Dazu kann die Vorrichtung 600 eine WLAN-Antenne (nicht dargestellt), beispielsweise eine WiFi-Antenne, aufweisen. Beispielsweise kann die WLAN-Antenne in einer oberen Abdeckung der Vorrichtung 600 angeordnet sein. Die Steuerungseinheit kann außerdem dazu eingerichtet sein, über das Internet in einer Cloud gespeicherte Daten abzurufen. Beispielsweise kann die Steuerungseinheit dazu eingerichtet sein, in der Cloud gespeicherte Daten bezüglich des in den Aufnahmeraum 612 eingebrachten Saatguts bzw. der daraus wachsenden Pflanzen abzurufen.

Beispielsweise kann die Steuerungseinheit dazu eingerichtet sein, in der Cloud gespeicherte Daten bezüglich der jeweiligen Bedürfnisse des eingebrachten Pflanzentyps, seiner jeweiligen Wachstumsphase und/oder seines Zustands in Bezug auf die Lufttemperatur, die Luftfeuchtigkeit, die Beleuchtungsintensität, die Beleuchtungsdauer und das Zuführen von Wasser und Nährstoffen abzurufen. Des Weiteren kann die Steuerungseinheit dazu eingerichtet sein, auf Basis der aus der Cloud abgerufenen Daten Regelgrößen für die Lufttemperatur, die Luftfeuchtigkeit, die Beleuchtungsintensität, die Beleuchtungsdauer und das Befüllen der Bewässerungswannen festzulegen und an die Klimatisierungseinrichtung, die Beleuchtungsvorrichtung bzw. die Bewässerungsvorrichtung auszugeben. Entsprechend kann die Steuerungseinheit dazu eingerichtet sein, die Klimatisierungseinrichtung, die Beleuchtungsvorrichtung und die Bewässerungsvorrichtung derart anzusteuern, dass die Lufttemperatur, die Luftfeuchtigkeit, die Beleuchtungsintensität, die Beleuchtungsdauer und das Befüllen der Bewässerungswannen entsprechend den spezifischen Bedürfnissen der in den Aufnahmeraum eingebrachten bzw. wachsenden Pflanzen eingestellt wird.

Die Vorrichtung 600 kann des Weiteren dazu eingerichtet sein, von den Sensoren, beispielsweise den Temperatursensoren und den Luftfeuchte-Sensoren, ermittelte Werte sowie von der Kamera aufgenommene Bilder an die Cloud zu übermitteln. Die an die Cloud übermittelten Sensorwerte und Kamerabilder können aus der Cloud abgerufen werden, um auf der Grundlage der Sensorwerte und der Kamerabilder beispielsweise eine Evaluierung des Pflanzenwachstums vorzunehmen, Anweisungen an die Steuerungseinheit zu verbessern und/oder Fehlfunktionen zu diagnostizieren.

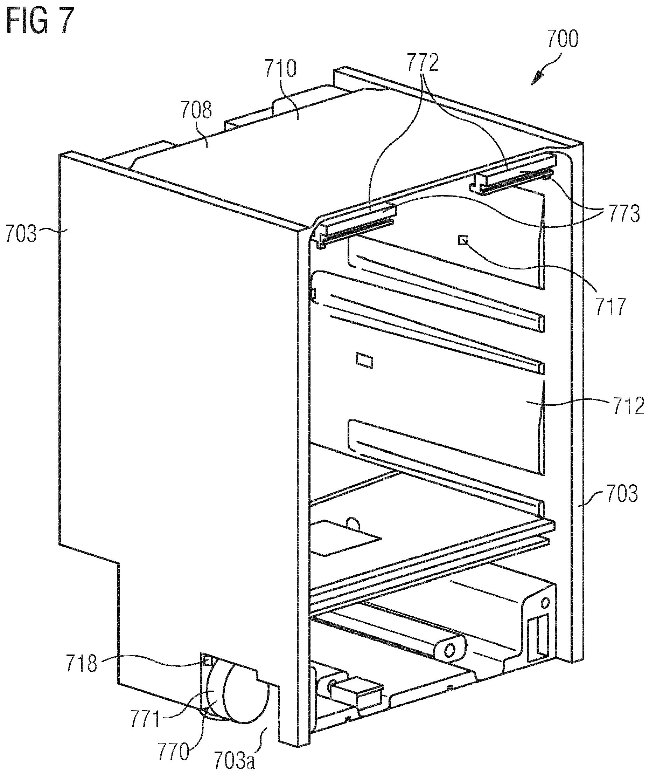

Fig.7 zeigt eine Darstellung eines Gehäuses der Vorrichtung zur Aufzucht von Pflanzen gemäß verschiedenen Ausführungsbeispielen.

Wie in Fig. 7 dargestellt, weist das Gehäuse 710 der Vorrichtung zur Aufzucht von Pflanzen 700 in verschiedenen Ausführungsbeispielen des Weiteren ein Frischluftgebläse 770 auf. Das Frischluftgebläse 770 kann beispielsweise in einem unteren Bereich einer Seitenwand 703 der Vorrichtung 700 angeordnet sein. Die Seitenwand 703 kann dazu in dem unteren Bereich eine Aussparung 703a aufweisen, wobei das Frischluftgebläse 770 derart angeordnet sein kann, dass es Luft aus der Umgebung der Vorrichtung 700 durch die Aussparung 703a hindurch ansaugen kann. Alternativ kann das Frischluftgebläse 770 beispielsweise in einem Sockelbereich 714 einer Frontseite der Vorrichtung 700 angeordnet sein (nicht dargestellt).

Das Frischluftgebläse 770 kann dazu eingerichtet sein, von der Steuerungseinheit 60 (nicht dargestellt; siehe Fig.1) mittels der Klimatisierungseinrichtung 30 (nicht dargestellt; siehe Fig.1) angesteuert zu werden. Die Steuerungseinheit kann dazu eingerichtet sein, die Klimatisierungseinrichtung derart anzusteuern, dass mittels des Frischluftgebläses 770 Frischluft aus einer Umgebung der Vorrichtung 700 in den Aufnahmeraum 712 der Vorrichtung 700 hinein gepumpt wird. Anders ausgedrückt kann die Steuerungseinrichtung dazu eingerichtet sein, das Frischluftgebläse 770 derart anzusteuern, dass Umgebungsluft in den Aufnahmeraum 712 hinein geblasen wird.

Die Vorrichtung 700 kann ferner Luftaustrittsöffnungen 772 aufweisen. Die Luftaustrittsöffnungen 772 können beispielsweise in einem oberen Bereich des Aufnahmeraums 712 angeordnet sein. Beispielsweise können die Luftaustrittsöffnungen 772 an einer Deckplatte 708 des Gehäuses 710 angeordnet sein. Die Luftaustrittsöffnungen 772 können dazu eingerichtet sein, Luft aus dem Aufnahmeraum 712 nach außen strömen zu lassen. Dabei können die Luftaustrittsöffnungen 772 dazu eingerichtet sein zu verhindern, dass in dem Aufnahmeraum 712 ein Überdruck entsteht.

Die Vorrichtung 700 kann ferner mindestens einen Aktivkohlefilter 771 aufweisen, der dazu eingerichtet ist, die mittels des Frischluftgebläses 770 aus der Umgebung angesaugte Luft zu filtern. Der mindestens eine Aktivkohlefilter 771 kann beispielsweise zwischen dem Frischluftgebläse 770 und dem Aufnahmeraum 712 angeordnet sein. Dabei kann der mindestens eine Aktivkohlefilter 771 dazu eingerichtet sein, Staub und andere Partikel derart aus der Umgebungsluft zu filtern, dass diese nicht in den Aufnahmeraum 712 der Vorrichtung gelangen.

Außerdem kann die Vorrichtung weitere Aktivkohlefilter 773 aufweisen, die an den Luftaustrittsöffnungen 772 angeordnet sind. Die Aktivkohlefilter 773 an den Luftaustrittsöffnungen 772 können dazu eingerichtet sein, die aus dem Aufnahmeraum 712 ausströmende Luft derart zu filtern, dass eventuell in dem Aufnahmeraum 712 entstehende Gerüche nicht in die Umgebung abgegeben werden.

Zusätzlich kann die Vorrichtung 700 in verschiedenen Ausführungsbeispielen einen Temperatursensor 718 zum Ermitteln einer Umgebungstemperatur aufweisen. Der Umgebungstemperatursensor 718 kann beispielsweise ebenfalls in der Aussparung 703a der Seitenwand 703 angeordnet sein. Alternativ kann der Umgebungstemperatursensor 718 beispielsweise in dem Sockelbereich 714 der Frontseite der Vorrichtung 700 angeordnet sein (nicht dargestellt).

Die Steuerungseinheit kann in verschiedenen Ausführungsbeispielen dazu eingerichtet sein, das Frischluftgebläse 770 derart anzusteuern, dass dem Aufnahmeraum 712 Frischluft aus der Umgebung zugeführt wird. Die Steuerungseinheit kann beispielsweise dazu eingerichtet sein, das Frischluftgebläse 770 derart anzusteuern, dass dem Aufnahmeraum 712 zu vorher festgelegten Zeiten, beispielsweise zu vorher festgelegten Tageszeiten, Frischluft aus der Umgebung zugeführt wird. Alternativ kann die Steuerungseinheit dazu eingerichtet sein, das Frischluftgebläse 770 derart anzusteuern, dass dem Aufnahmeraum 712 in regelmäßigen Intervallen Frischluft aus der Umgebung zugeführt wird.

Des Weiteren kann die Steuerungseinheit in verschiedenen Ausführungsbeispielen dazu eingerichtet sein, das Frischluftgebläse 770 derart anzusteuern, dass dem Aufnahmeraum 712 Frischluft zugeführt wird, wenn der CO₂-Gehalt in dem Aufnahmeraum 712 zu hoch wird. Dafür kann die Vorrichtung 700 zusätzlich einen CO₂-Sensor 717 zum Ermitteln eines CO₂-Gehalts der Luft in dem Aufnahmeraum 712 aufweisen. Der CO₂-Sensor 717 kann in der Seitenwand 703 des Gehäuses 710 angeordnet sein. Beispielsweise kann der CO₂-Sensor 717 zusammen mit, anders ausgedrückt in Nachbarschaft zu, dem Temperatursensor 316b und dem Luftfeuchte-Sensor 315b (siehe Fig.3) in dem Bereich des oberen Stockwerks 305b des Aufnahmeraums an einer Innenseite der Seitenwand 703 angeordnet sein. Alternativ können der Luftfeuchte-Sensor, der Temperatursensor und der CO₂-Sensor 717 als ein kombinierter Luftfeuchte-Temperatur-CO₂-Sensor 717 ausgeführt, anders ausgedrückt ausgebildet, sein.

Die Steuerungseinheit kann dazu eingerichtet sein, Sensordaten von dem CO₂-Sensor 717 zu empfangen. Des Weiteren kann die Steuerungseinheit dazu eingerichtet sein, basierend auf den von dem CO₂-Sensor 717 empfangenen Daten, beispielsweise basierend auf von dem CO₂-Sensor 717 empfangenen Messwerten, das Frischluftgebläse 770 mittels der Klimatisierungseinrichtung derart anzusteuern, dass der CO₂-Gehalt der Luft in dem Aufnahmeraum 712 einen vorher festgelegten Wert nicht übersteigt.

Fig.8 zeigt ein Ablaufdiagramm eines Verfahrens zur Aufzucht von Pflanzen gemäß verschiedenen Ausführungsbeispielen.

Wie in Fig. 8 dargestellt, weist das Verfahren zur Aufzucht von Pflanzen in verschiedenen Ausführungsbeispielen Einbringen einer oder mehrerer Saatmatten in einen Aufnahmeraum einer Vorrichtung zur Aufzucht von Pflanzen, 810, Ansteuern einer Bewässerungsvorrichtung, einer Beleuchtungsvorrichtung und einer Klimatisierungseinrichtung der Vorrichtung zur Aufzucht von Pflanzen mittels einer Programmsteuerung einer Steuerungseinheit, 820, Ermitteln einer Luftfeuchtigkeit in dem Aufnahmeraum mittels mindestens eines Luftfeuchte-Sensors, 830, und Ermitteln einer Lufttemperatur in dem Aufnahmeraum mittels mindestens eines Temperatursensors, 840, auf.

Dabei kann das Verfahren in verschiedenen Ausführungsbeispielen ferner Zuführen von Messwerten von dem Luftfeuchte-Sensor und/oder von dem Temperatursensor zu der Steuerungseinheit aufweisen. Anders ausgedrückt kann die Steuerungseinheit mittels der Sensoren ermittelte Messwerte, anders ausgedrückt mittels der Sensoren für die Luftfeuchtigkeit bzw. für die Lufttemperatur, d.h. mittels des Luftfeuchte-Sensors und/oder mittels des Temperatursensors, ermittelte Sensorwerte, empfangen.

Ferner kann das Verfahren Regeln eines in dem Aufnahmeraum herrschenden Innenraumklimas mittels der Klimatisierungseinrichtung mittels der Steuerungseinheit aufweisen. Beispielsweise kann das Verfahren Regeln, mittels der Steuerungseinheit, eines in dem Aufnahmeraum herrschenden Innenraumklimas mittels der Klimatisierungseinrichtung auf Basis der für die Luftfeuchtigkeit und für die Lufttemperatur ermittelten Sensorwerte aufweisen. Dabei kann beispielsweise die Steuerungseinheit die Lufttemperatur basierend auf den ermittelten Temperatursensorwerten regeln. Außerdem kann die Steuerungseinheit die Luftfeuchtigkeit basierend auf den ermittelten Luftfeuchte-Werten regeln.

Beispielsweise können die Lufttemperatur und/oder die Luftfeuchtigkeit in dem Aufnahmeraum mittels eines Kühlaggregats der Klimatisierungseinrichtung, unter Ansteuerung der Steuerungseinheit, eingestellt werden, wobei das Kühlaggregat optional einen Verdampfer aufweist. Die Steuerungseinheit kann beispielsweise die Lufttemperatur in dem Aufnahmeraum mittels des Kühlaggregats absenken. Anders ausgedrückt kann die Steuerungseinheit die Luft in dem Aufnahmeraum mittels des Kühlaggregats kühlen.

Andererseits kann die Steuerungseinheit die Lufttemperatur in dem Aufnahmeraum mittels einer von der Beleuchtungsvorrichtung abgestrahlten Lichtmenge erhöhen. Beispielsweise kann die Steuerungseinheit die Lufttemperatur in dem Aufnahmeraum mittels einer von der Beleuchtungsvorrichtung abgestrahlten Wärmemenge erhöhen. Anders ausgedrückt kann die Steuerungseinheit die Beleuchtungsvorrichtung derart ansteuern, dass mittels einer von der Beleuchtungsvorrichtung neben dem Licht abgestrahlten Wärmemenge, anders ausgedrückt einer von der Beleuchtungsvorrichtung abgestrahlten Wärmeenergie, die Lufttemperatur in dem Aufnahmeraum erhöht wird.

Die Beleuchtungsvorrichtung kann mittels eines für jede der in den Aufnahmeraum eingebrachten Aufzuchteinheiten LED-Moduls Licht abstrahlen. Dabei kann jedes der LED-Module Licht unterschiedlichster spektraler Zusammensetzungen abstrahlen. Beispielsweise können die LED-Module mittels einer Mehrzahl von LEDs, beispielsweise drei oder vier LEDs, wobei jede der LEDs jeweils einen Farbkanal aufweist, Licht der entsprechenden Farbe abstrahlen. Anders ausgedrückt können die LED-Module mittels der LEDs Licht in beispielsweise drei oder vier unterschiedlichen Farbkanälen abstrahlen. Dabei kann jedes LED-Modul zwischen 0% und 100% gedimmt, anders ausgedrückt geregelt bzw. verändert, werden. Alternativ kann jede der LEDs einzeln zwischen 0% und 100% gedimmt, anders ausgedrückt geregelt bzw. verändert, werden, beispielsweise mittels Pulsweitenmodulation (PWM; englisch pulse width modulation) oder mittels der angelegten Spannung.

Jedes LED-Modul kann beispielsweise mittels mindestens einer LED Licht im blauen Bereich des Spektrums abstrahlen, beispielsweise in einem Bereich von ungefähr 430 nm bis ungefähr 490 nm, beispielsweise in einem Bereich von ungefähr 440 nm bis ungefähr 475 nm, beispielsweise in einem Bereich von ungefähr 450 nm bis 460 nm. Ferner kann jedes LED-Modul beispielsweise mittels mindestens einer LED Licht im roten Bereich des Spektrums abstrahlen, beispielsweise in einem Bereich von ungefähr 640 nm bis ungefähr 700 nm, beispielsweise in einem Bereich von ungefähr 650 nm bis ungefähr 680 nm, beispielsweise in einem Bereich von ungefähr 660 nm bis 670 nm. Des Weiteren kann jedes LED-Modul beispielsweise mittels mindestens einer LED Licht im dunkelroten Bereich des Spektrums abstrahlen, beispielsweise in einem Bereich von ungefähr 700 nm bis ungefähr 780 nm, beispielsweise in einem Bereich von ungefähr 720 nm bis ungefähr 760 nm, beispielsweise in einem Bereich von ungefähr 730 nm bis 740 nm. Außerdem kann jedes LED-Modul beispielsweise mittels mindestens einer LED Licht in einer Zusammensetzung des Spektrums abstrahlen, dass weißes Licht abgestrahlt wird.

Dabei kann jedes der LED-Module mittels einer unterschiedlichen Anzahl von LEDs der jeweiligen Wellenlänge Licht abstrahlen. Beispielsweise kann jedes LED-Modul mittels mindestens einer LED, die Licht mit einer Wellenlänge von 450 nm abstrahlt, mindestens einer LED, die Licht mit einer Wellenlänge von 660 nm abstrahlt, mindestens einer LED, die Licht mit einer Wellenlänge von 730 nm abstrahlt, und mindestens einer LED, die weißes Licht, beispielsweise in einer Zusammensetzung, dass weißes Licht mit einem Peak im grünen Bereich abgestrahlt wird, abstrahlt, Licht zum Beleuchten des Aufnahmeraums der Vorrichtung bzw. zum Beleuchten der in den Aufnahmeraum eingebrachten Pflanzen abstrahlen. Alternativ kann jedes der LED-Module beispielsweise mittels einer LED, die Licht mit einer Wellenlänge von 450 nm abstrahlt, zwei LEDs, die Licht mit einer Wellenlänge von 660 nm abstrahlen, einer LED, die Licht mit einer Wellenlänge von 730 nm abstrahlt, und einer LED, die weißes Licht, beispielsweise in einer Zusammensetzung, dass weißes Licht mit einem Peak im grünen Bereich abgestrahlt wird, abstrahlt, Licht zum Beleuchten des Aufnahmeraums der Vorrichtung bzw. zum Beleuchten der in den Aufnahmeraum eingebrachten Pflanzen abstrahlen. Dabei können die LED-Module jedoch auch mittels einer anderen jeweilige Anzahl von LEDs der unterschiedlichen Wellenlängen Licht abstrahlen. Außerdem können andere LED-Module mit LEDs, die Licht anderer Wellenlängen abstrahlen, verwendet werden, wenn dies für das Keimen des in den Aufnahmeraum eingebrachten Saatguts oder das Wachstum der daraus wachsenden Pflanzen förderlich ist.

Die Steuerungseinheit kann in verschiedenen Ausführungsbeispielen jedes der LED-Module derart ansteuern, dass eine Beleuchtungsdauer, eine Beleuchtungs-Intensität und eine Zusammensetzung des Beleuchtungsspektrums, anders ausgedrückt eine Zusammensetzung der abgestrahlten Wellenlängenbereiche, geregelt, anders ausgedrückt gesteuert bzw. angepasst bzw. verändert, wird.

In dem Verfahren zur Aufzucht von Pflanzen kann außerdem in verschiedenen Ausführungsbeispielen die Luftfeuchtigkeit in dem Aufnahmeraum geregelt werden. Beispielsweise kann die Steuerungseinheit die Luftfeuchtigkeit in dem Aufnahmeraum mittels des Verdampfers regeln. Beispielsweise kann die Steuerungseinheit die Klimatisierungseinrichtung derart ansteuern, dass die Luftfeuchtigkeit mittels des Verdampfers abgesenkt wird. Andererseits kann die Steuerungseinheit die Klimatisierungseinrichtung derart ansteuern, dass die Luftfeuchtigkeit ansteigt, wobei die Luftfeuchtigkeit ansteigt, indem Wasser, das mittels der Bewässerungsvorrichtung den in dem Aufnahmeraum angeordneten Pflanzen zugeführt wird, verdunstet. Des Weiteren kann Wasser an den Wurzeln und in den Blättern der in dem Aufnahmeraum wachsenden Pflanzen verdunsten und kann mittels der Photosynthesetätigkeit und der Atmung der in dem Aufnahmeraum wachsenden Pflanzen abgegeben werden.

In dem Verfahren zur Aufzucht von Pflanzen kann ferner Wasser, das beim Vorbeiströmen der Luft an dem Verdampfer kondensiert, ablaufen und in dem Wassertank der Bewässerungsvorrichtung gesammelt werden, derart dass dieses Kondenswasser dem Wasserkreislaufsystem der Bewässerungsvorrichtung zugeführt wird.

Das Verfahren zur Aufzucht von Pflanzen kann in verschiedenen Ausführungsbeispielen des Weiteren Reinigen der Luft in dem Aufnahmeraum aufweisen. Anders ausgedrückt kann in dem Verfahren die Luft in dem Aufnahmeraum gereinigt werden. Beispielsweise kann die Luft in dem Aufnahmeraum mittels Bestrahlens mit Licht im UV-C-Bereich gereinigt werden. Dazu kann die aus dem Aufnahmeraum abgepumpte Luft (siehe Pfeile 661a, 661b in Fig.6) durch eine geeignete Röhre, beispielsweise eine UV-durchlässige Röhre aus Quarzglas, hindurchgeleitet werden und dabei mit Licht im UV-C-Bereich derart bestrahlt werden, dass dabei in der aus dem Aufnahmeraum abgepumpten Luft vorhandene Keime, beispielsweise Pilze, Pilzsporen und/oder Bakterien, abgetötet werden. Anders ausgedrückt kann in dem Verfahren zur Aufzucht von Pflanzen die aus dem Aufnahmeraum abgepumpte Luft (siehe Pfeile 661a, 661b in Fig.6) mittels Bestrahlens mit Licht im UV-C-Bereich sterilisiert werden, bevor sie durch die Eintrittsöffnungen zurück in den Aufnahmeraum strömt (siehe Pfeile 663a, 663b in Fig.6).

Das Verfahren kann in verschiedenen Ausführungsbeispielen ferner Kühlen von in dem Aufnahmeraum befindlicher Luft mittels mindestens eines Kühlgebläses der Klimatisierungseinrichtung aufweisen. Beispielsweise kann die Steuerungseinheit die Klimatisierungseinrichtung derart ansteuern, dass die in dem Aufnahmeraum befindliche Luft mittels des Kühlgebläses gekühlt wird. Wie unter Bezugnahme auf Fig.6A bereits ausgeführt, kann die in dem Aufnahmeraum befindliche Luft dazu mittels des Kühlgebläses aus dem Aufnahmeraum abgesaugt werden. Die Luft kann dann an dem an einer Rückseitenwand der Vorrichtung angeordneten Verdampfer vorbeigeleitet und mittels spezifischer Lufteintrittsöffnungen zurück in den Aufnahmeraum geleitet werden, wobei sich die an dem Verdampfer vorbeiströmende Luft derart abkühlt, dass die in den Aufnahmeraum zurückgeleitete Luft kühler ist als die aus dem Aufnahmeraum abgesaugte Luft.

Des Weiteren kann das Verfahren in verschiedenen Ausführungsbeispielen Einbringen einer oder mehrerer Aufzuchteinheiten in den Aufnahmeraum, wobei jede Aufzuchteinheit ein Stockwerk in dem Aufnahmeraum bildet, und wobei jede Aufzuchteinheit eine Bewässerungswanne, mindestens ein LED-Modul und einen oder mehrere Mattenträger aufweist, und Auflegen einer oder mehrerer Saatmatten auf jeden der Mattenträger, wobei jede der Saatmatten Saatgut (bzw. bereits ausgekeimte Pflanzen) aufweist, aufweisen.

Anders ausgedrückt können in dem Verfahren zur Aufzucht von Pflanzen ferner eine oder mehrere Aufzuchteinheiten in den Aufnahmeraum eingebracht werden. Dabei kann jede der Aufzuchteinheiten eine Bewässerungswanne, mindestens ein LED-Modul und einen oder mehrere Mattenträger aufweisen und derart in dem Aufnahmeraum angeordnet werden, dass von jeder der Aufzuchteinheiten jeweils ein Stockwerk in dem Aufnahmeraum gebildet wird. Beispielsweise kann eine untere Aufzuchteinheit mit einer ersten (beispielsweise einer unteren) Bewässerungswanne, einem ersten (beispielsweise einem unteren) LED-Modul und einem oder mehreren Mattenträgern derart in dem Aufnahmeraum angeordnet werden, dass sie ein unteres Stockwerk bildet. Außerdem kann eine obere Aufzuchteinheit mit einer zweiten (beispielsweise einer oberen) Bewässerungswanne, einem zweiten ((beispielsweise einem oberen) LED-Modul und einem oder mehreren Mattenträgern derart in dem Aufnahmeraum angeordnet werden, dass sie ein oberes Stockwerk bildet.

Auf jeden der Mattenträger können in verschiedenen Ausführungsbeispielen eine oder mehrere Saatmatten aufgelegt werden. Jede der Saatmatten kann dabei Saatgut aufweisen, wobei vorzugsweise aus dem Saatgut Pflanzen auswachsen können. Alternativ können die Saatmatten bereits ausgekeimte Pflanzen aufweisen und können mit den ausgekeimten Pflanzen in den Aufnahmeraum eingebracht werden. Dabei kann die Steuerungseinheit die Klimatisierungseinrichtung derart ansteuern, dass in dem Aufnahmeraum bzw. in dem Bereich jedes Stockwerks ein dem Pflanzenwachstum zuträgliches Innenraumklima eingestellt wird.

In dem Verfahren zur Aufzucht von Pflanzen kann die Luft in jedem Stockwerk mittels eines separaten Kühlgebläses gekühlt werden. Anders ausgedrückt kann die Lufttemperatur in dem Aufnahmeraum im Bereich jedes Stockwerks mittels der Steuerungseinheit einzeln geregelt werden. Beispielsweise kann die Steuerungseinheit das Kühlgebläse für das untere Stockwerk derart ansteuern, dass die Lufttemperatur im Bereich des unteren Stockwerks abgesenkt wird. Ebenso kann die Steuerungseinheit das Kühlgebläse für das obere Stockwerk derart ansteuern, dass die Lufttemperatur im Bereich des oberen Stockwerks abgesenkt wird. In dieser Weise kann die Lufttemperatur in dem Bereich der einzelnen Stockwerke mittels der von der Steuerungseinheit angesteuerten Klimatisierungseinrichtung separat geregelt werden.

Des Weiteren kann jedes LED-Modul mittels eines separaten LED-Kühlgebläses gekühlt werden. Beispielsweise kann das untere LED-Modul mittels des unteren LED-Kühlgebläses gekühlt werden. Außerdem kann das obere LED-Modul mittels des oberen LED-Kühlgebläses gekühlt werden. Dazu können das untere LED-Kühlgebläse und das obere LED-Kühlgebläse Umgebungsluft beispielsweise aus einer rückseitigen Umgebung der Vorrichtung zur Aufzucht von Pflanzen ansaugen und an dem ersten LED-Modul bzw. dem zweiten LED-Modul vorbeileiten. Beispielsweise können die LED-Kühlgebläse Umgebungsluft ansaugen und an über den LED-Modulen angeordneten Kühlrippen derart vorbeileiten, dass von den LED-Modulen erzeugte Wärme abgeführt wird.

Das Verfahren zur Aufzucht von Pflanzen kann in verschiedenen Ausführungsbeispielen ferner Umwälzen von Luft in dem Aufnahmeraum mittels mindestens eines Gebläses der Klimatisierungseinrichtung und Zuführen von Frischluft mittels mindestens eines Frischluftgebläses der Klimatisierungseinrichtung aufweisen. Anders ausgedrückt kann die Steuerungseinheit die Klimatisierungseinrichtung zum einen derart ansteuern, dass die sich in dem Aufnahmeraum befindende Luft mittels des mindestens einen Gebläses umgewälzt wird. Zur Regelung des Innenraumklimas in dem Aufnahmeraum in dem Verfahren zur Aufzucht von Pflanzen kann die Steuerungseinheit in verschiedenen Ausführungsbeispielen zum anderen das Frischluftgebläse derart ansteuern, dass dem Aufnahmeraum Frischluft aus der Umgebung zugeführt wird. Beispielsweise kann die Steuerungseinheit das Frischluftgebläse derart ansteuern, dass dem Aufnahmeraum zu vorher festgelegten Zeiten, beispielsweise zu vorher festgelegten Tageszeiten, Frischluft aus der Umgebung zugeführt wird. Alternativ kann die Steuerungseinheit das Frischluftgebläse derart ansteuern, dass dem Aufnahmeraum in regelmäßigen Intervallen Frischluft aus der Umgebung zugeführt wird. Überschüssige Luft kann dabei mittels an der Vorderseite der Vorrichtung angeordneter Luft-Austrittsöffnungen in die Umgebung zurückströmen.

Des Weiteren kann die Steuerungseinheit in verschiedenen Ausführungsbeispielen das Frischluftgebläse derart ansteuern, dass dem Aufnahmeraum Frischluft zugeführt wird, wenn der CO₂-Gehalt in dem Aufnahmeraum zu hoch wird. Dafür kann das Verfahren zusätzlich Ermitteln eines CO₂-Gehalts der Luft in dem Aufnahmeraum mittels eines CO₂-Sensors aufweisen. Der CO₂-Sensor kann, wie unter Bezugnahme auf Fig.7 beschrieben, beispielsweise in der Seitenwand des Gehäuses der Vorrichtung angeordnet sein. Beispielsweise kann der CO₂-Sensor in einem kombinierten Luftfeuchte-Temperatur-CO₂-Sensor integriert sein.

Der CO₂-Sensor kann Messsignale, die den CO₂-Gehalt der Luft in dem Aufnahmeraum betreffen, an die Steuerungseinheit weiterleiten. Anders ausgedrückt kann die Steuerungseinheit Sensordaten von dem CO₂-Sensor empfangen. Des Weiteren kann die Steuerungseinheit basierend auf den von dem CO₂-Sensor empfangenen Daten, beispielsweise basierend auf von dem CO₂-Sensor empfangenen Messwerten, das Frischluftgebläse mittels der Klimatisierungseinrichtung derart ansteuern, dass der CO₂-Gehalt der Luft in dem Aufnahmeraum einen vorher festgelegten Wert nicht übersteigt. Dies kann dadurch gewährleistet werden, dass mittels des Frischluftgebläses Frischluft aus der Umgebung der Vorrichtung zur Aufzucht von Pflanzen in den Aufnahmeraum geblasen wird.

Die dem Aufnahmeraum mittels des Frischluftgebläses zugeführte Frischluft kann außerdem mittels Aktivkohlefilter derart gefiltert werden, dass kein Staub oder andere Verunreinigungen der Umgebungsluft in den Aufnahmeraum geblasen werden bzw. bei abgeschaltetem Frischluftgebläse keine Gerüche aus dem Aufnahmeraum ausströmen können. Des Weiteren kann die aus dem Aufnahmeraum in die Umgebung zurückströmende Luft dabei mittels weiterer Aktivkohlefilter an den Luft-Austrittsöffnungen derart gefiltert werden, dass keine Gerüche aus dem Aufnahmeraum in die Umgebung abgegeben werden.

Bei der Regelung der Klimatisierungseinrichtung kann die Steuerungseinheit in verschiedenen Ausführungsbeispielen das Innenraumklima in jedem Stockwerk, anders ausgedrückt das Kleinraumklima, mittels individuell auf das in dem entsprechenden Stockwerk des Aufnahmeraums aufgenommene Saatgut abgestimmter Klimatisierungsdaten der Programmsteuerung regeln. Anders ausgedrückt kann die Programmsteuerung Klimatisierungsdaten aufweisen, wobei die Klimatisierungsdaten auf das auf den Saatmatten angeordnete Saatgut (bzw. auf die darauf wachsenden Pflanzen) abgestimmt sein können. Entsprechend der Klimatisierungsdaten kann die Steuerungseinheit die Klimatisierungseinrichtung derart ansteuern, dass in jedem der Stockwerke ein auf das entsprechende eingebrachte Saatgut abgestimmte Innenraumklima, d.h. Kleinraumklima, eingestellt wird.

Beispielsweise kann die Programmsteuerung Klimatisierungsdaten aufweisen, die auf das Saatgut (bzw. die Pflanzen) abgestimmt sind, das auf den auf den unteren Mattenträgern aufgelegten Saatmatten angeordnet ist (bzw. wächst). Entsprechend diesen Klimatisierungsdaten kann die Steuerungseinheit im Bereich des unteren Stockwerks ein Kleinraumklima einstellen, das auf das Wachstum der auf dem unteren Mattenträger wachsenden Pflanzen abgestimmt ist. Außerdem kann die Programmsteuerung Klimatisierungsdaten aufweisen, die auf das Saatgut abgestimmt sind, das auf den auf den oberen Mattenträgern aufgelegten Saatmatten angeordnet ist. Entsprechend diesen Klimatisierungsdaten kann die Steuerungseinheit im Bereich des oberen Stockwerks ein Kleinraumklima einstellen, das auf das Wachstum der auf dem oberen Mattenträger wachsenden Pflanzen abgestimmt ist.

Das Verfahren kann in verschiedenen Ausführungsbeispielen ferner Abrufen von individuell auf das Saatgut abgestimmten Beleuchtungsdaten und/oder Bewässerungsdaten und/oder Klimatisierungsdaten aus einem Datenspeicher der Programmsteuerung aufweisen. Beispielsweise können die individuell auf das Saatgut abgestimmten Beleuchtungsdaten und/oder Bewässerungsdaten und/oder Klimatisierungsdaten mittels der Steuerungseinheit aus einem Datenspeicher der Programmsteuerung abgerufen werden. Nachfolgend kann die Steuerungseinheit die Beleuchtungsvorrichtung, die Bewässerungsvorrichtung und die Klimatisierungseinrichtung auf Basis der individuell auf das Saatgut abgestimmten Beleuchtungsdaten und/oder Bewässerungsdaten und/oder Klimatisierungsdaten derart ansteuern, dass in dem Aufnahmeraum ein dem Wachstum der darin wachsenden Pflanzen zuträgliches Innenraumklima eingestellt wird.

Dabei kann der Datenspeicher vorzugsweise über eine in der Vorrichtung zur Aufzucht von Pflanzen vorgesehene Internetverbindung als externer Datenspeicher vorgesehen sein. Anders ausgedrückt kann die Steuerungseinheit mittels einer Internetverbindung, die mittels entsprechender Antennen der Vorrichtung zur Aufzucht von Pflanzen bereitgestellt wird, entsprechende Daten aus einem externen Datenspeicher abrufen.

In verschiedenen Ausführungsbeispielen kann das Verfahren ferner Identifizieren von mindestens einer Saatmatte mittels eines Programmsensors zur Steuerung der Programmsteuerung aufweisen. Beispielsweise kann die Steuerungseinheit mittels des Programmsensors zur Steuerung der Programmsteuerung RFID-Signale bzw. eine QR-Kennzeichnung bzw. einen Barcode der mindestens einen Saatmatte erfassen. Dabei kann der Programmsensor als RFID-Sensor und/oder QR-Code Sensor und/oder Barcode-Sensor vorgesehen sein. Anders ausgedrückt kann die Steuerungseinheit mittels der RFID-Signale bzw. der QR-Kennzeichnung bzw. des Barcodes der Saatmatten das auf der jeweiligen Saatmatte angeordnete Saatgut (bzw. die auf der jeweiligen Saatmatte ausgekeimten Pflanzen) identifizieren, die auf das jeweilige Saatgut (bzw. die jeweiligen Pflanzen) abgestimmten Klimatisierungsdaten aus dem Datenspeicher abrufen und das in dem Aufnahmeraum herrschende Innenraumklima an das jeweilige Saatgut (bzw. die jeweiligen Pflanzen) anpassen.

Dadurch kann gemäß dem Verfahren zur Aufzucht von Pflanzen in verschiedenen Ausführungsbeispielen mittels der Steuerungseinheit das auf das Saatgut abgestimmte Innenraumklima eingestellt werden. Beispielsweise kann die Steuerungseinheit mittels der Programmsteuerung auf Basis der abgerufenen Klimatisierungsdaten ein auf das jeweilige, in der entsprechenden Aufzuchteinheit wachsende Saatgut abgestimmtes Kleinraumklima herstellen. Anders ausgedrückt kann die Steuerungseinheit auf Basis der abgerufenen Klimatisierungsdaten die Bewässerungsvorrichtung, die Beleuchtungsvorrichtung und die Klimatisierungseinrichtung derart ansteuern, dass ein auf das Saatgut in der entsprechenden Aufzuchteinheit abgestimmtes Kleinraumklima eingestellt wird.

In dem Verfahren kann ferner die Bewässerungsvorrichtung in verschiedenen Ausführungsbeispielen der Bewässerungswanne, die in jeder der einen oder mehreren Aufzuchteinheiten unter den jeweiligen Saatmatten angeordnet sind, Wasser und Nährstoffe zuführen. Anders ausgedrückt können in dem Verfahren zur Aufzucht von Pflanzen in jeder Aufzuchteinheit dem auf den Saatmatten angeordneten Saatgut bzw. den daraus wachsenden Pflanzen von der Bewässerungsvorrichtung mittels der Bewässerungswannen Wasser und Nährstoffe zugeführt werden.

Des Weiteren kann das Verfahren zur Aufzucht von Pflanzen Aufnehmen von Bildern der aus dem in den Aufnahmeraum aufgenommenen Saatgut entstehenden Pflanzen mittels mindestens einer Kamera aufweisen. Dabei kann das Verfahren ferner die Schritte Weiterleiten von Signalen von der mindestens einen Kamera zur Programmsteuerung, Vergleichen der mittels der Kamera aufgenommenen Bilder mit einem oder mehreren in einem Mustererkennungsspeicher der Steuerungseinheit gespeicherten Referenzbildern zum Ermitteln eines Zustands der in dem Aufnahmeraum aufgenommenen Pflanzen mittels einer Mustererkennungsvorrichtung der Steuerungseinheit und Anpassen der Programmsteuerung an die jeweilige Pflanze und ihren Zustand aufweisen.

Im Einzelnen kann die in der Vorrichtung angeordnete Kamera Bilder aufnehmen, mittels derer unter Verwendung von gespeicherten Referenzbildern der Wachstumsfortschritt und damit der Zustand der in dem Aufnahmeraum wachsenden Pflanzen ermittelt werden kann. Dazu kann die Steuerungseinheit die von der Kamera aufgenommenen Bilder an die Programmsteuerung weiterleiten. Die Referenzbilder zum Vergleichen der aufgenommenen Bilder können in dem externen Datenspeicher gespeichert sein. Die Steuerungseinheit kann ferner mittels der Mustererkennungsvorrichtung die von der Kamera aufgenommenen Bilder mit den gespeicherten Referenzbildern vergleichen und daraus einen Wachstumsfortschritt bzw. einen momentanen Zustand der Pflanzen ermitteln. Weiterhin kann die Steuerungseinheit die Programmsteuerung derart ansteuern, dass ein an den Zustand der Pflanzen in dem Aufnahmeraum angepasstes Innenraumklima in dem Aufnahmeraum eingestellt wird. Beispielsweise kann die Programmsteuerung derart angesteuert werden, dass sie ein an die in jedem Stockwerk des Aufnahmeraums wachsenden Pflanzen angepasstes Kleinraumklima einstellt.

Mittels des Identifizierens des Saatguts und des Ermittelns des momentanen Zustands der daraus wachsenden Pflanzen kann in verschiedenen Ausführungsbeispielen die Steuerungseinheit somit die Bewässerungsvorrichtung, die Beleuchtungsvorrichtung und die Klimatisierungseinrichtung derart ansteuern, dass ein auf die jeweiligen in der Aufzuchteinheit wachsenden Pflanzen und ihren Zustand, beispielsweise ihren Wachstumsfortschritt, abgestimmtes Innenraumklima bzw. Kleinraumklima hergestellt wird.

In verschiedenen Ausführungsbeispielen kann das Verfahren ferner Ermitteln, ob eine Tür der Vorrichtung geöffnet oder geschlossen ist, mittels eines Tür-Sensors aufweisen. Anders ausgedrückt kann in dem Verfahren zur Aufzucht von Pflanzen ferner mittels des Tür-Sensors ermittelt werden, ob eine Tür der Vorrichtung geöffnet oder geschlossen ist. Dabei kann der Tür-Sensor optional ein IR-Sensor sein. Dazu kann der Tür-Sensor die entsprechenden Messsignale an die Steuerungseinheit weiterleiten. Anders ausgedrückt kann die Steuerungseinheit Signale von dem Tür-Sensor empfangen.

Die Steuerungseinheit kann in verschiedenen Ausführungsbeispielen bei geöffneter Tür die Bewässerungsvorrichtung, die Beleuchtungsvorrichtung und die Klimatisierungseinrichtung derart ansteuern, dass der Nutzer in dem Aufnahmeraum beispielsweise mit den Saatmatten hantieren kann. Das heißt, bei geöffneter Tür kann die Steuerungseinheit die Beleuchtungsvorrichtung beispielsweise derart ansteuern, dass Licht einer spektralen Zusammensetzung abgestrahlt wird, bei der der Nutzer gut sieht (anders ausgedrückt in einer für den Nutzer sichtbaren spektralen Zusammensetzung), und kann die Klimatisierungseinrichtung derart ansteuern, dass das mindestens eine Kühlgebläse abgeschaltet wird. Anders ausgedrückt kann die Steuerungseinheit beispielsweise die Beleuchtungsvorrichtung bei geöffneter Tür derart ansteuern, dass Licht in einer spektralen Zusammensetzung abgestrahlt wird, so dass für einen Nutzer der Aufnahmeraum normal ausgeleuchtet wird, er gut sehen kann, aber nicht geblendet wird bzw. seine Augen nicht geschädigt werden. Außerdem kann die Steuerungseinheit beispielsweise die Klimatisierungseinrichtung bei geöffneter Tür derart ansteuern, dass das Kühlgebläse nicht läuft, so dass ein in der Vorrichtung herrschender Geräuschpegel bei geöffneter Tür verringert ist und die von dem Kühlgebläse verbrauchte Energie reduziert ist. Ferner kann die Steuerungseinheit bei geöffneter Tür beispielsweise die Bewässerungsvorrichtung derart ansteuern, dass den Bewässerungswannen kein Wasser zugeführt wird, so dass der Nutzer beispielsweise Saatmatten oder Pflanzen aus dem Aufnahmeraum entnehmen oder neue Saatmatten oder Pflanzen in den Aufnahmeraum einbringen kann, ohne dass Gefahr besteht, dass Wasser verschüttet wird.

Beispielsweise kann die Steuerungseinheit bei geöffneter Tür die Bewässerungsvorrichtung derart ansteuern, dass kein Wasser in dem Wasserkreislaufsystem umgepumpt wird, und kann bei geschlossener Tür die Bewässerungsvorrichtung derart ansteuern, dass Wasser aus dem Wassertank in dem Wasserkreislaufsystem umgepumpt wird. Ebenso kann die Steuerungseinheit das Wasserkreislaufsystem beispielsweise derart ansteuern, dass bei geöffneter Tür den Bewässerungswannen kein Wasser aus dem Wassertank zugeführt wird und bei geschlossener Tür den Bewässerungswannen Wasser aus dem Wassertank zugeführt wird. Außerdem kann die Steuerungseinheit das Wasserkreislaufsystem derart ansteuern, dass bei geöffneter Tür einer Vorrichtung zum Reinigen des Wassers kein Wasser aus dem Wassertank zugeführt wird und bei geschlossener Tür der Vorrichtung zum Reinigen des Wassers Wasser aus dem Wassertank zugeführt wird. Dadurch kann vermieden werden, dass Wasser bei geöffneter Tür beim Befüllen der Bewässerungswannen unkontrolliert aus den Bewässerungswannen überläuft oder abläuft, wodurch ein Verbraucher davor geschützt ist, beispielsweise beim Hantieren mit den über den Bewässerungswannen angeordneten Saatmatten oder Pflanzen nass zu werden oder Wasser in der Umgebung der Vorrichtung zu verschütten.

Bei geschlossener Tür hingegen kann die Steuerungseinheit in verschiedenen Ausführungsbeispielen die Bewässerungsvorrichtung, die Beleuchtungsvorrichtung und die Klimatisierungseinrichtung derart ansteuern, dass wieder das auf die jeweiligen in der Aufzuchteinheit wachsenden Pflanzen und ihren Zustand abgestimmte Innenraumklima hergestellt wird. Beispielsweise kann die Beleuchtungsvorrichtung von der Steuerungseinheit derart angesteuert werden, dass Licht in einem der Saatgut-Keimung bzw. dem Pflanzenwachstum besonders zuträglichen bzw. förderlichen Wellenlängenbereich, beispielsweise mit einer Mischung von Licht im Wellenlängenbereich für grünes Licht und für rotes Licht des Spektrums oder in einer anderen spektralen Zusammensetzung abgestrahlt wird. Beispielsweise kann die Beleuchtungsvorrichtung Licht in einer oben beschriebenen spektralen Zusammensetzung aus Licht mit einer Wellenlänge von 450 nm, Licht mit einer Wellenlänge von 660 nm und Licht mit einer Wellenlänge von 730 nm abstrahlen. Ferner kann die Klimatisierungseinrichtung von der Steuerungseinheit derart angesteuert werden, dass das mindestens eine Kühlgebläse eingeschaltet ist, wenn dies zur Aufrechterhaltung des Innenraumklimas in dem Aufnahmeraum erforderlich ist.

Beispielsweise kann die Klimatisierungseinrichtung von der Steuerungseinheit derart angesteuert werden, dass die Luft in dem Aufnahmeraum erwärmt oder gekühlt wird, indem das Kühlgebläse eingeschaltet wird, wenn die Lufttemperatur im Aufnahmeraum zu hoch ist, oder indem das Kühlgebläse ausgeschaltet wird, wenn die Lufttemperatur in dem Aufnahmeraum zu niedrig ist. Außerdem kann die Bewässerungseinrichtung von der Steuerungseinheit derart angesteuert werden, dass den Bewässerungswannen Wasser und Nährstoffe zugeführt werden, so dass die Pflanzen optimal versorgt werden.

In Summe können die hier bereitgestellten Ausführungsbeispiele der Vorrichtung zur Aufzucht von Pflanzen und eines Verfahrens zu Aufzucht von Pflanzen gewährleisten, eine Umgebung bereitzustellen, in der in einem Maßstab, der auch in modernen Küchen realisierbar ist, aus Saatgut Pflanzen, wie beispielsweise Kräuter, Gemüse, Pilze, Obst und Salat, gezogen werden können. Dadurch wird mittels der vorliegenden Vorrichtung dem durchschnittlichen Verbraucher, insbesondere dem Bewohner von Großstädten, eine Möglichkeit an die Hand gegeben, seinem Speiseplan entsprechend seiner persönlichen Vorlieben frische Zutaten zufügen zu können und dabei einerseits eine gewünschte Qualität sicherzustellen und andererseits den dafür notwendigen Aufwand auf das im modernen Berufsleben mögliche Maß zu beschränken.

Insbesondere wird mittels der bereitgestellten Ausführungsformen der Klimatisierungseinrichtung der vorliegenden Vorrichtung sichergestellt, dass beim Keimen und Wachsen der Pflanzen in dem Aufnahmeraum der Vorrichtung ein Innenraumklima bereitgestellt werden kann, das den in der Vorrichtung angebauten Pflanzensorten und ihrem Zustand, beispielsweise ihrem Wachstumsfortschritt, besonders zuträglich ist.

Die besondere Ausgestaltung der in verschiedenen Ausführungsbeispielen bereitgestellten Klimatisierungseinrichtung der vorliegenden Vorrichtung stellt dabei sicher, dass in jedem der Stockwerke der Vorrichtung den darin aufgenommenen Pflanzen eine für ihr Wachstum optimale Lufttemperatur und Luftfeuchte spezifisch eingestellt wird, wobei diese Parameter mittels entsprechender Sensoren kontrolliert und geregelt werden. Dabei gehen in die Regelung mittels der dafür vorgesehenen Steuerungseinheit in verschiedenen Ausführungsbeispielen neben den Messwerten der verschiedenen Sensoren insbesondere Informationen über die eingebrachte Pflanzensorte als auch über den mittels einer Kamera ermittelten Zustand der daraus wachsenden Pflanzen ein, wofür außerdem Informationen zu den spezifischen Bedürfnissen einzelner Saatgut- oder Pflanzenarten und zum Vergleichen der Kamerabilder aus einem Datenspeicher abgerufen werden können.

## Patentansprüche

1. Vorrichtung zur Aufzucht von Pflanzen (100, 300), aufweisend:
• eine Bewässerungsvorrichtung (20);
• eine Beleuchtungsvorrichtung (30);
• eine Klimatisierungseinrichtung (40);
• einen Aufnahmeraum (12, 312) zum Aufnehmen einer oder mehrerer Saatmatten;
• eine Steuerungseinheit (60), die eingerichtet ist, mittels einer Programmsteuerung die Bewässerungsvorrichtung (20), die Beleuchtungsvorrichtung (30) und die Klimatisierungsvorrichtung (40) zu steuern;
• mindestens einen Luftfeuchte-Sensor (316) zum Ermitteln einer Luftfeuchtigkeit in dem Aufnahmeraum (12, 312); und
• mindestens einen Temperatursensor (315) zum Ermitteln einer Lufttemperatur in dem Aufnahmeraum (12, 312).

2. Vorrichtung nach Anspruch 1, wobei die Steuerungseinheit (60) eingerichtet ist, Messwerte von dem Luftfeuchte-Sensor (316) und von dem Temperatursensor (315) zu empfangen,
wobei optional die Steuerungseinheit (60) eingerichtet ist, auf Basis der für die Luftfeuchtigkeit und für die Lufttemperatur ermittelten Sensorwerte mittels der Klimatisierungseinrichtung (40) ein in dem Aufnahmeraum (12, 312) herrschendes Innenraumklima zu regeln.

3. Vorrichtung nach Anspruch 1 oder 2, wobei die Klimatisierungseinrichtung (40, 440) ferner ein Kühlaggregat (441) zum Einstellen der Lufttemperatur und der Luftfeuchtigkeit in dem Aufnahmeraum (12, 412) aufweist,
wobei das Kühlaggregat (441) optional einen Verdampfer (444) aufweist.

4. Vorrichtung nach einem der Ansprüche 1 bis 3, wobei die Klimatisierungseinrichtung (40) mindestens ein Kühlgebläse (434) zum Kühlen von in dem Aufnahmeraum (12, 412) befindlicher Luft aufweist.

5. Vorrichtung nach einem der Ansprüche 1 bis 4, ferner aufweisend:
• eine oder mehrere Aufzuchteinheiten (50, 450), die in den Aufnahmeraum (12, 412) eingebracht werden,
• wobei jede Aufzuchteinheit (50, 450) ein Stockwerk (405) in dem Aufnahmeraum (12, 412) bildet,
• wobei jede Aufzuchteinheit (50, 450) eine Bewässerungswanne (22, 422), ein LED-Modul (432), einen oder mehrere Mattenträger (54, 454) und eine oder mehrere Saatmatten (56)aufweist, und
• wobei jede der Saatmatten (56) Saatgut aufweist.

6. Vorrichtung nach Anspruch 5, wobei die Programmsteuerung individuell auf in dem Aufnahmeraum (12, 412) aufgenommenes Saatgut abgestimmte Klimatisierungsdaten aufweist.

7. Vorrichtung nach einem der Ansprüche 1 bis 6, wobei die Vorrichtung mindestens einen Programmsensor aufweist, wobei der Programmsensor als RFID-Sensor und/oder QR-Code Sensor und/oder Barcode-Sensor vorgesehen ist, welcher RFID-Signale bzw. eine QR-Kennzeichnung bzw. einen Barcode von mindestens einer Saatmatte zur Steuerung der Programmsteuerung erfassen kann,
wobei optional die Steuerungseinheit (60) eingerichtet ist, mittels der Programmsteuerung auf Basis der Klimatisierungsdaten ein auf das Saatgut in der entsprechenden Aufzuchteinheit (50) abgestimmtes Innenraumklima einzustellen.

8. Vorrichtung nach einem der Ansprüche 1 bis 7, ferner aufweisend einen Tür-Sensor (319) zum Ermitteln, ob eine Tür (16) der Vorrichtung (100, 300) geöffnet oder geschlossen ist,
wobei der Tür-Sensor (319) optional ein IR-Sensor (319) ist,
wobei optional die Steuerungseinheit (60) dazu eingerichtet ist, bei geöffneter Tür (16) die Beleuchtungsvorrichtung (30) derart anzusteuern, dass Licht einer für den Nutzer sichtbaren spektralen Zusammensetzung abgestrahlt wird, die Bewässerungsvorrichtung (20) derart anzusteuern, dass den Bewässerungswannen (22) kein Wasser zugeführt wird, und die Klimatisierungseinrichtung (40) derart anzusteuern, dass das mindestens eine Kühlgebläse (434) abgeschaltet wird, und
wobei optional die Steuerungseinheit (60) dazu eingerichtet ist, bei geschlossener Tür die Bewässerungsvorrichtung (20), die Beleuchtungsvorrichtung (30) und die Klimatisierungseinrichtung (40) derart anzusteuern, dass das auf die jeweiligen in der Aufzuchteinheit (50) wachsenden Pflanzen und ihren Zustand abgestimmte Innenraumklima hergestellt wird.

9. Verfahren zur Aufzucht von Pflanzen, aufweisend:
• Einbringen einer oder mehrerer Saatmatten (56) in einen Aufnahmeraum (12, 312) einer Vorrichtung zur Aufzucht von Pflanzen (100, 300);
• Ansteuern einer Bewässerungsvorrichtung (20), einer Beleuchtungsvorrichtung (30) und einer Klimatisierungseinrichtung (40) der Vorrichtung zur Aufzucht von Pflanzen (100, 300) mittels einer Programmsteuerung einer Steuerungseinheit (60);
• Ermitteln einer Luftfeuchtigkeit in dem Aufnahmeraum (12, 312) mittels mindestens eines Luftfeuchte-Sensors (316); und
• Ermitteln einer Lufttemperatur in dem Aufnahmeraum (12, 312) mittels mindestens eines Temperatursensors (315).

10. Verfahren nach Anspruch 9, ferner aufweisend Zuführen von Messwerten von dem Luftfeuchte-Sensor (316) und von dem Temperatursensor (315) zu der Steuerungseinheit (60),
optional ferner aufweisend Regeln eines in dem Aufnahmeraum (12, 312) herrschenden Innenraumklimas mittels der Klimatisierungseinrichtung (40) auf Basis der für die Luftfeuchtigkeit und für die Lufttemperatur ermittelten Sensorwerte mittels der Steuerungseinheit (60).

11. Verfahren nach Anspruch 9 oder 10, wobei die Lufttemperatur und die Luftfeuchtigkeit in dem Aufnahmeraum (12, 412) mittels eines Kühlaggregats (441) der Klimatisierungseinrichtung (40, 440) eingestellt werden,
wobei das Kühlaggregat (441) optional einen Verdampfer (444) aufweist.

12. Verfahren nach einem der Ansprüche 9 bis 11, ferner aufweisend:
• Einbringen einer oder mehrerer Aufzuchteinheiten (50, 450) in den Aufnahmeraum (12, 412), wobei jede Aufzuchteinheit (50, 450) ein Stockwerk (405) in dem Aufnahmeraum (12, 412) bildet, und wobei jede Aufzuchteinheit (50, 450) eine Bewässerungswanne (22, 422), mindestens ein LED-Modul (432) und einen oder mehrere Mattenträger (54, 454) aufweist, und
• Auflegen einer oder mehrerer Saatmatten (56) auf jeden der Mattenträger (54, 454), wobei jede der Saatmatten (56) Saatgut aufweist,
• optional ferner aufweisend Kühlen der Luft in jedem Stockwerk (405a, 405b) mittels eines Kühlgebläses (434a, 434b) und Kühlen jedes LED-Moduls (432a, 432b) mittels mindestens eines LED-Kühlgebläses (434a, 434b).

13. Verfahren nach Anspruch 12, wobei die Steuerungseinheit (60) das Innenraumklima in jedem Stockwerk (405) mittels individuell auf das in dem Aufnahmeraum (12, 412) aufgenommene Saatgut abgestimmter Klimatisierungsdaten der Programmsteuerung regelt.

14. Verfahren nach einem der Ansprüche 9 bis 13, ferner aufweisend Erfassen von RFID-Signalen und/oder einer QR-Kennzeichnung und/oder eines Barcodes von mindestens einer Saatmatte mittels eines Programmsensors zur Steuerung der Programmsteuerung, wobei der Programmsensor als RFID-Sensor und/oder QR-Code Sensor und/oder Barcode-Sensor vorgesehen ist.

15. Verfahren nach Anspruch 13 oder 14, wobei die Steuerungseinheit (60) mittels der Programmsteuerung auf Basis der Klimatisierungsdaten ein auf das Saatgut in der entsprechenden Aufzuchteinheit (12) abgestimmtes Innenraumklima einstellt.
